## Europäisches Patentamt

## European Patent Office

## Office européen des brevets

(11) Veröffentlichungsnummer: **0 242 638**
**B1**

(12) **EUROPÄISCHE PATENTSCHRIFT**

(45) Veröffentlichungstag der Patentschrift:
**20.12.89**

(51) Int. Cl.⁴: **B23B 29/034**

(21) Anmeldenummer: **87104651.2**

(22) Anmeldetag: **30.03.87**

(54) Bohrwerkzeug.

(30) Priorität: **15.04.86 DE 3612648**
**18.06.86 DE 3620389**
**03.12.86 DE 3641262**

(43) Veröffentlichungstag der Anmeldung:
**28.10.87 Patentblatt 87/44**

(45) Bekanntmachung des Hinweises auf die Patenterteilung:
**20.12.89 Patentblatt 89/51**

(84) Benannte Vertragsstaaten:
**AT BE CH DE ES FR GB GR IT LI LU NL SE**

(56) Entgegenhaltungen:
**DE-A- 3 206 678**
**FR-A- 2 569 141**
**FR-A- 2 575 404**
**GB-A- 595 908**
**GB-A- 2 163 075**

(73) Patentinhaber: **Eischeid, Karl, Schulweg 23,**
**D-5250 Engelskirchen(DE)**

(72) Erfinder: **Eischeid, Karl, Schulweg 23,**
**D-5250 Engelskirchen(DE)**

(74) Vertreter: **Sturies, Herbert et al, Patentanwälte Dr. Ing.**
**Dipl. Phys. Herbert Sturies Dipl. Ing. Peter Eichler**
**Postfach 20 12 42, D-5600 Wuppertal 2(DE)**

ACTORUM AG

## Beschreibung

Die Erfindung bezieht sich auf ein Bohrwerkzeug zur Herstellung von Hinterschneidungen in nicht durchgehenden zylindrischen Vorbohrungen, mit einem im Durchmesser dem Durchmesser der Vorbohrung etwa entsprechenden Bohrschaft, an dessen Spitze mindestens eine radial über dessen Umfang vorstehende Seitenschneide angebracht ist und der über eine bei seiner Axialbeaufschlagung radialen Vortrieb der Seitenschneide bewirkende Schrägfläche an der Sohle der Vorbohrung insbesondere über ein Druckstück abstützbar ist.

Ein Bohrwerkzeug dieser Art ist aus der GB-A 2 163 075 bekannt. Seine Bohrschaftspitze ist gabelförmig ausgebildet. Die Gabel lagert einen Querstift, auf dem eine Seitenschneide schwenkbeweglich ist. Die Seitenschneide ist vorbohrungssohlenseitig ballig ausgebildet und stützt sich auf einer in der Vorbohrung losen Kugel ab, wenn der Bohrschaft axial beaufschlagt wird. Infolgedessen erfolgt ein radialer Vortrieb der Seitenschneide. Das bekannte Bohrwerkzeug ist vergleichsweise kompliziert und in seinen Einzelheiten zu schwach und eine Verbesserung seiner Standfestigkeit ist offensichtlich wünschenswert.

Ein Bohrwerkzeug der eingangs genannten Art ist auch aus der DE-A1 3 206 678 bekannt. Bei diesem bekannten Bohrwerkzeug ist der Bohrschaft ein Hohlzylinder, der bohrseitig längsgeschlitzt ist. An den durch die Längsschlitzung gebildeten Spreizlappen sind Hartmetallstifte als radial vorstehende Seitenschneiden angebracht. Im Inneren des hohlzylindrischen Bohrschafts ist ein Spreizkonus längsgeführt. Dessen Spreizflächen sind unterhalb der Spitze des Bohrschafts so angeordnet, daß sie die Spreizlappen des Bohrschafts auseinanderbiegen, wenn letzterer auf das sich am Boden der Vorbohrung abstützende Druckstück bzw. Konusstück aufgetrieben wird. Dabei unterliegt der hohlzylindrische Schaft insbesondere im Übergangsbereich seiner Spreizlappen in den ungeschlitzten Bohrschaftbereich hohen mechanischen Beanspruchungen, die der Standfestigkeit des Bohrwerkzeugs abträglich sind. Außerdem ist das bekannte Bohrwerkzeug vergleichsweise aufwendig, weil es im Bereich der Seitenschneiden des hohlzylindrischen Bohrschafts Axialführungsmittel (Führungszapfen) zur Relativführung zwischen dem Schaft und dem Druckstück aufweisen muß.

Aus der GB-A 595 908 ist ein Bohrwerkzeug zur Herstellung von Hinterschneidungen in nicht durchgehenden zylindrischen Vorbohrungen bekannt, mit einem Bohrschaft, an dessen Spitze eine radial über dessen Umfang vorstehende Seitenschneide angebracht ist. Der Bohrschaft ist an seinem der starr angebrachten Seitenschneide gegenüberliegenden Außenumfang mit einer das Einführen des Bohrschafts in die Vorbohrung erleichternden Abflachung versehen, die sich von der Spitze des Bohrschafts über dessen Länge erstreckt. Oberhalb der Seitenschneide hat der bekannte Bohrschaft ein vom Bohrschaftmesser auf Vorbohrungsdurchmesser ansteigend konisches Führungsstück, welches beim Hineinschieben in die Vorbohrung an der Vorbohrungswand abgestützt wird, so daß es infolgedessen zum gewünschten radialen Vortrieb der Seitenschneide kommt.

Der Erfindung liegt daher die Aufgabe zugrunde, ein Bohrwerkzeug der eingangs genannten Art so zu verbessern, daß es im Aufbau einfach ist und im rauhen Betrieb lange Stand hält.

Diese Aufgabe wird dadurch gelöst, daß die Spitze des Bohrschafts mit der den radialen Vortrieb der Seitenschneide bewirkenden Schrägfläche versehen und damit direkt an der Sohle der Vorbohrung oder an dem Druckstück abstützbar ist, und daß der etwa vorbohrungsstarke Bohrschaft an seinem der starr angebrachten Seitenschneide gegenüberliegenden Außenumfang mit einer das Einführen des Bohrschafts in die Vorbohrung ermöglichenden Abflachung versehen ist, die sich stufenlos mit demselben Winkel zur Bohrschaftachse von der Spitze des Bohrschafts über dessen Länge erstreckt.

Für die Erfindung ist von Bedeutung, daß eine komplizierte Mechanik im Bereich der Bohrschaftspitze bzw. im Bohrbereich vermieden wird. Nach der Erfindung genügt es, die bei Axialbeaufschlagung den radialen Vortrieb der Seitenschneide bewirkende Schrägfläche unmittelbar an der Bohrschaftspitze anzuordnen, nämlich als Stirnfläche des Bohrschafts. Da die Seitenschneide radial vorspringt und der Bohrschaft etwa einen dem Durchmesser der Vorbohrung entsprechenden Durchmesser hat, wird außerdem der Außenumfang des Bohrschafts so abgeflacht, daß problemloses axiales Einschieben des Bohrschafts mit seiner radial vorspringenden Seitenschneide in die Vorbohrung möglich ist.

Beim Bohren kann sich die Spitze des Bohrschafts an der Sohle der Vorbohrung abstützen, und zwar direkt oder über das vom Bohrschaft lose Druckstück. Bei ausreichend homogenem Werkstoff wird ein Druckstück nicht notwendig sein, beispielsweise bei Metall oder Kunststoff. Bei inhomogenem Werkstoff wird die Verwendung des losen Druckstücks empfehlenswert sein, beispielsweise bei Beton oder Holz, damit die Inhomogenität des Werkstoffs nicht dazu führt, daß der sich drehende Bohrer auf der Sohle der Vorbohrung ungleichmäßig gleitet bzw. rattert oder sich in dem Werkstoff verhakt und damit die Herstellung der Hinterschneidungen beeinträchtigt bzw. gar verhindert wird. Das in derartigen Fällen verwendete lose Druckstück, welches also mit der Bohrerspitze nicht mechanisch gekuppelt ist, kann grundsätzlich den gewünschten Anforderungen entsprechend ausgebildet werden, also eine entsprechende Formgebung erfahren und aus dem gewünschten Werkstoff hergestellt werden.

Der Bohrschaft ist kaum anders ausgebildet, als bei bekannten hartmetallbestückten Schlagbohrern, die sich bei maschinellem Antrieb bewährt haben und deren Herstellung mit einfachen Mitteln beherrscht wird.

Gegenüber dem bekannten Bohrwerkzeug ergibt sich eine erhebliche Vereinfachung, insbesondere werden festigkeitsmäßig problematische Querstifte und relativbewegliche Einzelteile am Bohrschaft vermieden. Das erfindungsgemäße Druckstück kann an der Sohle der Vorbohrung festsitzen und es findet dann keine Relativbewegung zwischen der Bohrspitze und dem Druckstück statt, wo also zwischen Stahlteilen geringe Reibung herrscht, verglichen mit der Relativbewegung zwischen Druckstück und Beton bei dem bekannten Bohrwerkzeug.

Der Bohrschaft ist bis auf ein durch einen Antriebsanschluß bedingtes kurzes Stück über seine gesamte Länge zur Spitze hin mit demselben Winkel abgeflacht. Die gleichmäßige und über die gesamte Länge des Bohrschaftes erfolgende Abflachung ist die optimale Anpassung des Bohrschaftes in festigkeitsmäßiger Hinsicht. Diese Anpassung wird dadurch ergänzt, daß der Bohrschaft mit seinem größten Radius bei zur Seitenschneide hin verlagertem Radienmittelpunkt abgeflacht ist, so daß der Bohrschaft im Abflachungsbereich längskantenfrei ist und andererseits aus Festigkeitsgründen möglichst großer Querschnitt zur Verfügung steht, wobei auch die der Abflachung gegenüberliegende Bohrschaftfläche denselben Radius aufweist.

Das Druckstück ist eine Kugel oder weist ein dem Bohrschaft benachbartes Druckstückteil auf, das halbkugelig, ballig, vor- oder rückspringend kegel- oder kegelstumpfförmig ausgebildet oder mit einer über den gesamten Zylinderquerschnitt ebenen Schrägfläche versehen ist, und/oder das ein der Sohle der Vorbohrung zugekehrtes Druckstückteil aufweist, das entsprechend rotationssymmetrisch, kugelig oder ballig geformt ist, wobei die beiden Druckstückteile mit einem bedarfsweise zwischen ihnen angeordneten Zylinder- oder Kegelstumpfstück einstückig sind. Die Kugel ist ein sehr einfaches und billiges Bauteil, was vorteilhaft ist, wenn man davon ausgeht, das lose Druckstück als verloren anzusehen, wenn man es nämlich aus der fertiggestellten Bohrung nicht wieder herausholt. Die Kugel bedingt aber eine vergleichsweise hohe Flächenpressung auf die Schrägfläche der Bohrschaftspitze, so daß es je nach Einsatzfall wünschenswert sein kann, diesen Nachteil vermeidende lose Druckstücke zur Verfügung zu haben. Hier helfen die desweiteren genannten Druckstücke, deren bohrschaftseitiges Ende der Schrägfläche der Bohrschaftspitze besser angepaßt werden kann, so daß sich größere linienförmige oder flächenförmige Berührungsbereiche ergeben, welche mit geringerer Flächenpressung belastet werden, so daß vor allem die Bohrschaftspitze einem geringeren Verschleiß unterliegt. Die Zylinderstücke bzw. Abschnitte dieser nicht kugelförmigen Druckstücke können so bemessen werden, daß ihr Außendurchmesser etwa dem Durchmesser der zylindrischen Vorbohrung entspricht, so daß das lose Druckstück seitlich gehalten ist, also die genaue axiale Zuordnung zwischen Druckstück und Bohrschaft gewahrt bleibt. Hierzu kann die Länge des Zylinderstücks so bemessen werden, daß bei weichem Werkstoff und beispielsweise schlagend beaufschlagtem Druckstück eine Verformung der das Druckstück haltenden Werkstoffflächen vermieden wird.

Um einen sicheren Eingriff zwischen Bohrschaftspitze und dem Druckstück bzw. den gewünschten radialen Vortrieb zu erhalten, erstreckt sich die Schrägfläche der Bohrschaftspitze vom abgeflachten Umfang des Bohrschafts aus zur Bohrschaftachse hin und dem Druckstück oder der Bohrschaftspitze zugeneigt, bei vorspringenden Druckstückenden über die Mittelachse hinaus.

Um die Entfernung von Bohrstaub zu erleichtern, weist der Bohrschaft eine in seiner Mittelachse von seiner Spitze bis zu seinem Antriebsanschluß längs durchlaufende Luftbohrung auf.

Um mit dem Bohrwerkzeug Hinterschneidungen herstellen zu können, die einem in die fertiggestellte Bohrung einzusetzenden Dübel eine größere Auszugsfestigkeit vermitteln können, sind an dem Bohrschaft mindestens zwei übereinander angeordnete Seitenschneiden vorhanden.

Für die Erfindung ist von Bedeutung, daß das Bohrwerkzeug mehrere Seitenschneiden zum Herstellen mehrerer Hinterschneidungen aufweist. Diese mehreren Hinterschneidungen vergrößern die Eingriffsflächen und erlauben infolgedessen einen besseren Sitz eines in die fertiggestellte Bohrung einzubringenden Dübels, insbesondere eines Klebeankers, dessen beim Befestigen austretender Klebstoff in die Hinterschneidungen eintritt und dadurch für die Verankerung des zu befestigenden Gegenstandes sorgt.

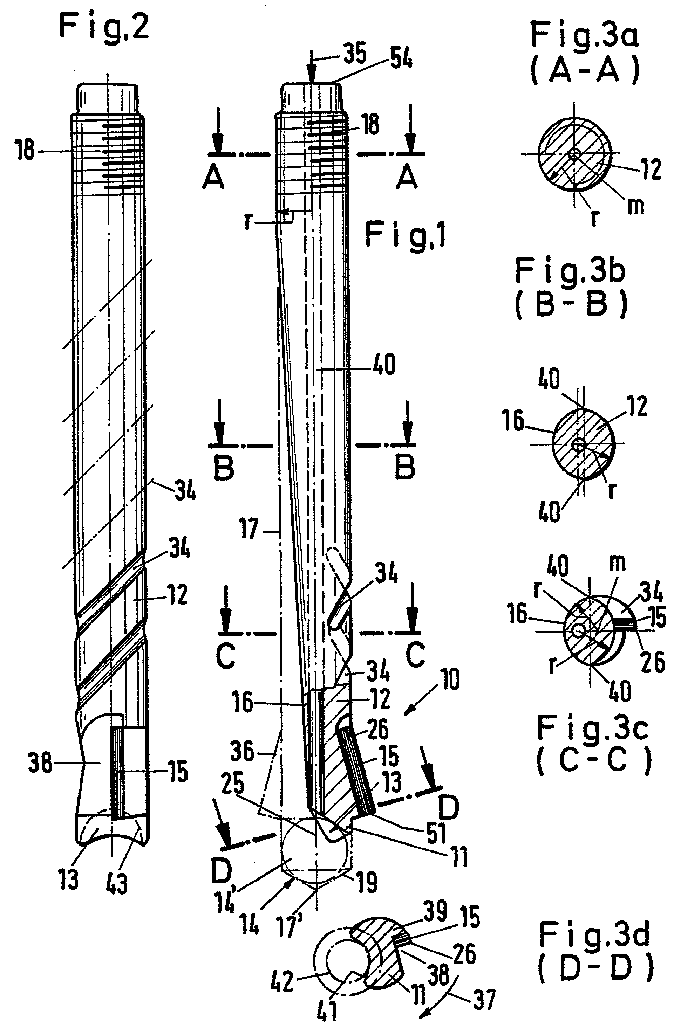

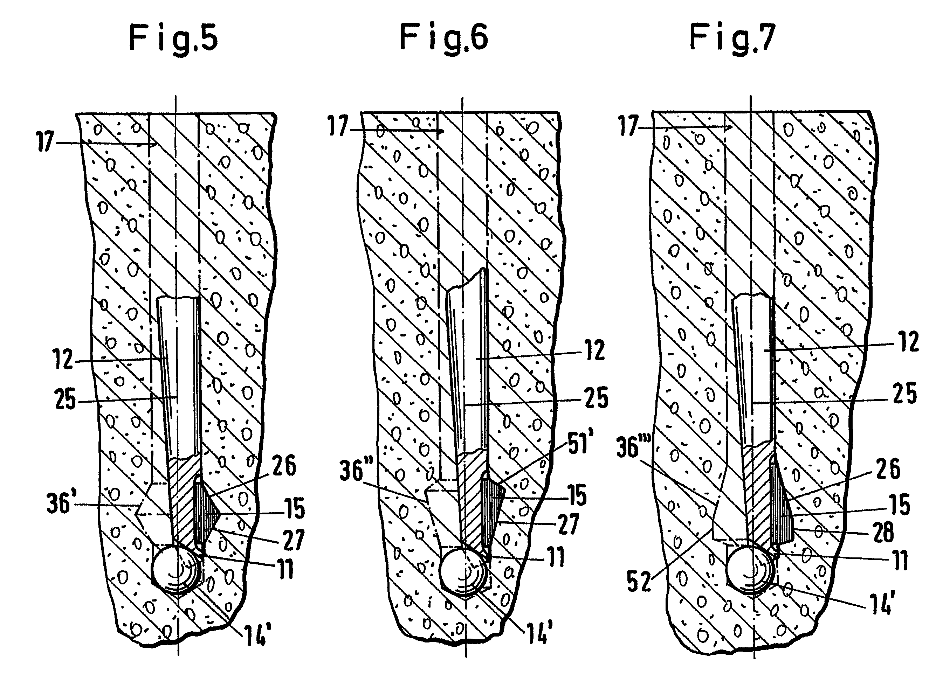

Die Form bzw. Profilierung der Hinterschneidungen kann den jeweiligen Bedürfnissen angepaßt werden. Möglich sind beispielsweise die in den Figuren 1 und 5 bis 7 dargestellten Profilierungen. Dabei kann jede Seitenschneide in derselben Weise ausgestaltet sein, es können aber auch unterschiedlich ausgestaltete Seitenschneiden an einem Bohrschaft kombiniert werden. Eine Kombination der Seitenschneiden der Figur 1 und 6 bietet sich beispielsweise an, wenn der die Bohrung bildende Werkstoff vergleichsweise wenig belastbar ist, so daß der zwischen zwei Hinterschneidungen befindliche Wandwulst möglichst dick sein soll. Die Kombination der Profile der Seitenschneiden kann also den jeweiligen Verhältnissen angepaßt werden.

Vorzugsweise bestehen die Seitenschneiden aus einzelnen Hartmetallstücken und sind in einer Flucht oder innerhalb eines Winkels von etwa bis zu 30° über den Umfang verteilt angeordnet. Die Verwendung einzelner Hartmetallstücke ist besonders wirtschaftlich, da sie der üblichen, für übliche Hartmetallbohrer dienenden Massenproduktion entnommen werden können. Es ist aber auch denkbar, zwei oder mehr einstückige Seitenschneiden zu verwenden, um beispielsweise eine extrem präzise Hinterschneidungszuordnung zu erreichen, ohne dazu den bei einzelnen Hartmetallstücken erforderlichen Herstellungsaufwand beim Einarbeiten der Ausnehmungen zur Aufnahme der Hartmetallstücke und beim Einbau der Hartmetallstücke treiben zu müssen.

Die Anordnung der einzelnen Hartmetallstücke in einer Flucht übereinander ist erforderlich, um ein solches Bohrwerkzeug in einer Vorbohrung mit vergleichsweise kleinem Durchmesser einsetzen zu können. Es ist aber auch eine Anordnung der einzelnen Hartmetallstücke in Umfangsrichtung hintereinander möglich, beispielsweise innerhalb eines Winkels von 30°. Infolgedessen kommen die Seitenschneiden beim sich drehenden Bohrwerkzeug zeitlich nacheinander an dieselbe Umfangsstelle der Vorbohrung. Das hat den Vorteil, daß ein dieser Vorbohrung benachbartes paralleles Moniereisen nicht von allen Seitenschneiden gleichzeitig angegriffen wird, sondern zeitlich nacheinander und damit besser durchschnitten werden kann.

Der größte Abstand der Seitenschneiden zum abgeflachten Umfang des Bohrschafts ist höchstens gleich dem Durchmesser des Bohrschafts. Infolgedessen kann das Bohrwerkzeug bei größtmöglichem Radialvorstand seiner Seitenschneiden und infolgedessen größtmöglicher Tiefe der Hinterschneidungen noch einwandfrei in die Vorbohrung hineingesteckt bzw. aus dieser herausgezogen werden.

Vorteilhaft ist es für eine zylindrische Vorbohrung mit einem einzigen Durchmesser, wenn die Spitzen aller Seitenschneiden auf einer Linie angeordnet sind, die die Längslinie des abgeflachten Umfangs des Bohrschaftes parallel ist, oder daß alle Seitenschneiden radial gleich weit über den Außenumfang des Bohrschafts vorstehen. Es ist ersteres die Konfiguration des Bohrwerkzeugs für größtmögliche Hinterschneidungstiefe. Ein solches Bohrwerkzeug empfiehlt sich insbesondere bei vergleichsweise kleinem Durchmesser der Vorbohrung. Dabei wird die maximale Bohrleistung erreicht, also das maximal zu erreichende Hinterschneidungsvolumen. Wäre der Radialvorstand aller Seitenschneiden gleich groß, so würden mit einem solchen Bohrwerkzeug gleich tiefe Hinterschneidungen erzielt. Da jedoch der Abstand des abgeflachten Umfangs des Bohrschafts von der benachbarten Wand der Vorbohrung auf der Höhe der antriebsanschlußseitigen Seitenschneide mindestens gleich deren radialen Vorstand sein muß, um das Bohrwerkzeug in die Vorbohrung hineinschieben bzw. aus den fertiggestellten Bohrungen herausziehen zu können, muß der Durchmesser der Vorbohrung vergleichsweise groß sein. Es ergibt sich jedoch bei gleichem Radialvorstand aller Seitenschneiden eine gleichmäßige Verteilung der Zugbelastung der Wandabschnitte der fertiggestellten Bohrung, weil alle Hinterschneidungen gleich tief sind.

Beim Überkopfarbeiten ist das Einbringen des losen Druckstücks in die zylindrische Vorbohrung mühsam, da es aufgrund der Schwerkraft die Tendenz hat, aus der Vorbohrung wieder herauszufallen. Es ist daher in Weiterbildung der Erfindung vorteilhaft, daß das in die Vorbohrung einzubringende, vom Bohrschaft lose Druckstück einen festen Wiederlagerkern hat, dessen größter Durchmesser kleiner als der Vorbohrungsdurchmesser ist und der zumindest teilweise nachgiebig umkleidet ist, wodurch ein Klemmbereich gebildet ist.

Infolge dieser Ausbildung des Druckstücks ist dessen Festklemmen in der zylindrischen Vorbohrung möglich. Das Druckstück kann von Hand ganz oder teilweise eingeschoben werden und klemmt dann. Anschließend wird es mit dem Bohrschaft gegen die Sohle der Vorbohrung geschoben und axialbeaufschlagt. Bei dieser Beaufschlagung stützt sich der feste Kern des Druckstücks an der Sohle ab und die nachgiebige Umkleidung wird durch das Aufschlagen der Schrägfläche der Bohrschaftsspitze zusammengedrückt und zertrümmert, löst sich also vom festen Wiederlagerkern und die Bruchstücke der nachgiebigen Umkleidung werden mit dem Bohrstaub entfernt.

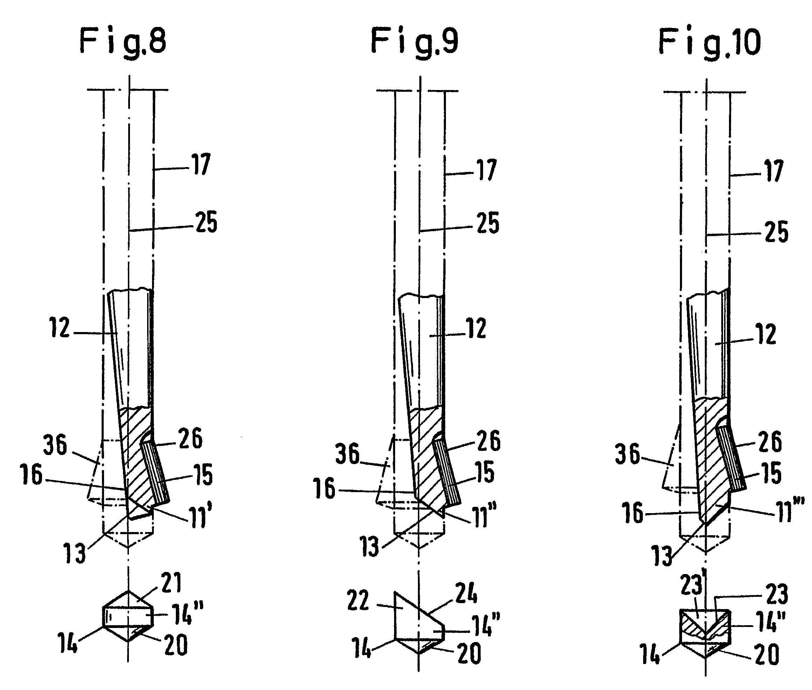

Die nachgiebige Umkleidung kann im Prinzip bei sämtlichen Ausgestaltungen von Druckstücken verwendet werden, beispielsweise bei Druckstücken der Figuren 8 bis 10 und 14 bis 17. Dabei ist es sinnvoll, die nachgiebige Umkleidung nur in einem der zylindrischen Vorbohrung benachbarten Bereich einzusetzen, wenn das Druckstück nur eine definierte Längslage innerhalb der zylindrischen Vorbohrung einnehmen kann.

Es ist besonders vorteilhaft, wenn das Druckstück direkt an der Schrägfläche der Bohrschaftspitze radialbeweglich befestigt ist. Ein solches Druckstück kann aus der Bohrung herausgezogen werden und ist vielfach zu verwenden. Die radialbewegliche Befestigung gewährleistet jedoch, daß in einfacher Weise, wie bei einem losen Druckstück, der gewünschte Radialvortrieb einer oder mehrerer Seitenschneiden erzeugt wird.

Um ein Bohrwerkzeug zur Herstellung von Hinterschneidungen so zu verbessern, daß automatisch mit der Herstellung der Hinterschneidung auch eine gut sichtbare Markierung erzeugt wird, weist der Bohrschaft an seinem antriebsseitigen Ende einen radial vorspringenden Markierungsschneider auf.

Mit dem Markierungsschneider werden gut sichtbare Markierungen in dem Werkstoff im Anfangsbereich der Vorbohrungen erzeugt. Eine Markierung bietet bei einer optischen Kontrolle die Gewähr zu erkennen, daß die Hinterschneidung ordnungsgemäß hergestellt ist. Durch den erfindungsgemäßen Markierungsschneider des Bohrwerkzeugs ist insbesondere eine leichte Kontrolle einer Vielzahl von beispielsweise reihenweise angeordneten Bohrungen möglich. Infolgedessen kann bei ordnungsgemäßer Kontrolle auch die konstruktionsmäßig vorgesehene Festigkeit der Verbindungen gewährleistet werden, also beispielsweise von Befestigungen mit Klebe- bzw. Reaktionsankern oder sonstigen Schwerlastdübeln.

Die Erfindung wird anhand von in der Zeichnung dargestellten Ausführungsbeispielen erläutert. Es zeigt:

Fig. 1 eine Seitenansicht eines Bohrschaftes,

Fig. 2 eine gegenüber Fig. 1 um 90° gedrehte Seitenansicht des Bohrschaftes der Fig. 1,

Fig. 3a bis d die in Fig. 1 bezeichneten Schnitte des Bohrschaftes,

Fig. 4a bis c veranschaulichen den radialen Vortrieb der Seitenschneide eines Bohrschaftes bei dessen Axialbeaufschlagung,

Fig. 5 bis 7 veranschaulichen unterschiedlich gestaltete Seitenschneiden und dadurch erzeugbare Hinterschneidungsformen,

Fig. 8 bis 10 unterschiedlich gestaltete Druckstücke und dementsprechend ausgebildete Bohrschaftspitzen,

Fig. 11 eine innerhalb der Vorbohrung angeordnete Verbindungskupplung,

Fig. 12, 13 den Fig. 4a,c entsprechende Darstellungen mit im Anfangsbereich der Vorbohrungen vorhandenen Ringkragenhülsen,

Fig. 14 bis 17 weitere Druckstückausbildungen,

Fig. 18 eine Seitenansicht eines Bohrers,

Fig. 19 eine gegenüber Fig. 18 um 90° gedrehte Seitenansicht des Bohrers der Fig. 18,

Fig. 20 eine Aufsicht auf den Bohrer der Fig. 18 in Richtung A,

Fig. 21 ein nahe der Sohle einer Vorbohrung angeordnetes Druckstück,

Fig. 22 eine Aufsicht auf das Druckstück der Fig. 21 in Richtung B, 45° versetzt,

Fig. 23 einen Querschnitt durch ein spezielles Druckstück des Bohrwerkzeugs,

Fig. 24 einen Schnitt durch eine Bohrschaftspitze mit daran befestigtem Druckstück,

Fig. 25 eine um 90° gedrehte Schnittdarstellung des Bohrwerkzeugs der Fig. 24,

Fig. 26 eine Seitenansicht eines Druckstücks ähnlich Fig. 25 vor Befestigung an einer Bohrschaftspitze,

Fig. 27 eine Aufsicht auf das Druckstück der Fig. 26 und

Fig. 28 eine Seitenansicht eines weiteren speziellen Druckstücks zur Befestigung an einer Bohrschaftspitze,

Fig. 29 eine teilweise geschnittene Seitenansicht eines Bohrwerkzeuges gemäß der Erfindung,

Fig. 30 eine um 90° gedrehte Seitenansicht des Bohrwerkzeugs der Fig. 29,

Fig 30a eine Aufsicht auf das Bohrwerkzeug der Fig. 2 in Richtung A und

Fig. 31a bis 31d unterschiedliche Ausgestaltungen von Markierungsschneidern.

Das in Fig. 1 dargestellte Bohrwerkzeug 10 besteht im wesentlichen aus einem Bohrschaft 12 und einem Druckstück 14. Der Bohrschaft 12 hat eine Spitze 11 und einen Antriebsanschluß 18, der beispielsweise als Gewinde dargestellt ist, jedoch auch bajonettförmig oder sonstwie in geeigneter Weise gestaltet sein kann. Das äußerste antriebsseitige Ende des Bohrschaftes 12 ist als Axialbeaufschlagungsfläche 54 ausgebildet, mit der sich der Bohrschaft 12 bei in Richtung des Pfeiles 35 erfolgender Axialbeaufschlagung z.B. durch eine Hammerbohrmaschine an dieser bzw. deren Aufnahme abstützt.

In Fig. 1 ist die zylindrische Vorbohrung 17 strichpunktiert eingezeichnet. Es ist ersichtlich, daß der Bohrschaft 12 an seinem oberen Ende einen etwa dem Durchmesser der Vorbohrung 17 entsprechenden Durchmesser aufweist. Das ergibt sich insbesondere aus dem Schnitt A-A der Fig. 3a, in dem der Radius r des Bohrschafts 12 ausgehend vom Radienmittelpunkt m eingezeichnet ist.

An der dem Druckstück 14 zugewendeten Spitze 11 hat der Bohrschaft 12 eine Seitenschneide 15, die radial über seinen Außenumfang vorspringt und so angeordnet ist, daß sich bei der in Fig. 1 dargestellten gleichachsigen Lage zwischen Vorbohrung 17 und Bohrschaft 12 die strichpunktiert dargestellte Hinterschneidung 36 erzeugen läßt. Die Seitenschneide 15 ist mit einer der Bohrschaftspitze zugeneigten Schneidkante 26 versehen, die im Querschnitt D-D der Fig. 3d deutlich sichtbar ist. Da die Drehung des Bohrwerkzeugs 10 der in Fig. 3d angegebenen Richtung des Pfeils 37 entsprechend erfolgt, ist die Bohrschaftspitze 11 im Bereich 38 vor der Seitenschneide 15 ausgenommen und im Bereich 39 zu ihrem Antrieb durch Werkstoff des Bohrschafts 12 abgestützt. Demgegenüber zeigt sich die Seitenschneide 15 mit ihrer Schneidkante 26 in Fig. 3c wegen der abgeänderten Schnittführung des Schnittes C-C etwas anders, nämlich unter Veranschaulichung von der Bohrstaubförderung dienenden Nutabschnitten 34.

Der Bohrschaft 12 ist mit einem abgeflachten Umfang 16 versehen, der sich von der Bohrschaftspitze 11 bis zum Antriebsanschluß 18 erstreckt. Aus Fig. 1 ist ersichtlich, daß diese Abflachung gleichmäßig bzw. mit demselben Winkel zur Bohrschaftachse 25 erfolgt, also ohne die Festigkeit des Bohrschafts 12 beeinträchtigende Abstufungen. Aus dem Vergleich der Fig. 3a bis 3c ist ersichtlich, daß die Abflachung mit dem Radius r des Antriebsanschlusses 18 erfolgt, der also an allen Stellen des Bohrschafts 12 ungeändert vorhanden ist, wobei aber der Radienmittelpunkt m zunehmend zum unabgeflachten Außenumfang des Bohrschafts 12 bzw. zur Seitenschneide 15 hin verlagert ist, wie sich insbesondere aus Fig. 3c ergibt. Durch diese Gestaltung der Abflachung ergeben sich Seitenkanten 40, deren eine aus der Fig. 1 deutlich sichtbar ist.

An der Bohrschaftspitze 11 ist eine Schrägfläche 13 vorhanden, mit der sich der Bohrschaft 12 auf dem Druckstück 14 abstützt, wenn er in der Richtung des Pfeils 35 in die Vorbohrung 17 hineingeschoben und damit das Druckstück 14 gegen die Sohle 19 der Vorbohrung 17 gepreßt wird. Die Schrägfläche 13 ist etwa unter 40° bis 70°, vorzugsweise 65° zur Bohrschaftachse 25 in Axialbeaufschlagungsrichtung 35 geneigt, also dem Druckstück 14 zugeneigt. Dabei ist die Schrägfläche 13 etwa parallel dem diagonal gegenüberliegenden Flächenabschnitt der Sohle 19. Eine Axialbeaufschlagung des Bohrschaftes 12 ergibt über die Schrägfläche 13 einen radialen Vortrieb der Seitenschneide 15 zur Herstellung der Hinterschneidung 36.

In den Fig. 1 bis 7 und 11 ist das Druckstück 14 eine Kugel 14', die infolge der Spitzform 17' der Vorbohrung 17 radial festliegt, wenn axial auf sie gedrückt wird.

Um die Flächenpressung zwischen der Schrägfläche 11 und der Kugel 14' gering zu halten, ist die Schrägfläche 13 der benachbarten Druckstückfläche der Kugel 14' räumlich angepaßt, was sich aus Fig. 3d ergibt, nach der die Schnittlinie 41 der Schrägfläche 13 einen dem Radius des dargestellten Anlageumfangs 42 angepaßten Radius hat, so daß sich eine Linienberührung zwischen der Spitze 11 und der Kugel 14 ergibt. Die räumliche Anpassung der Schrägfläche 13 an die Kugel 14' ergibt sich auch durch die gestrichelte Begrenzungskante 43 der Schrägfläche 13 gemäß Fig. 2.

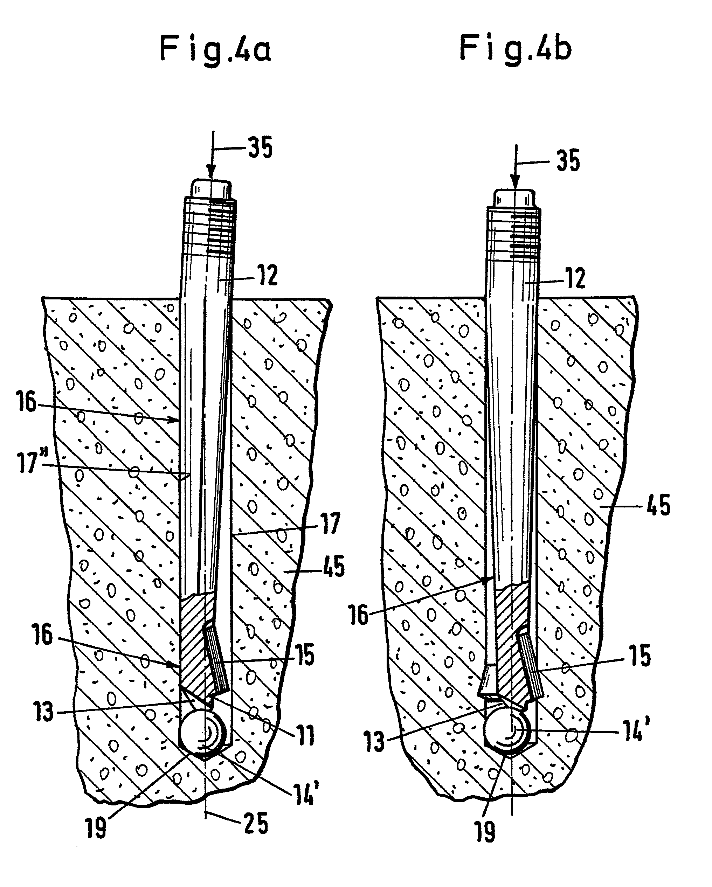

Die Arbeitsweise des Bohrwerkzeugs 10 wird anhand der Fig. 4a bis 4c erläutert. Zunächst wird die Kugel 14' in die zylindrische Vorbohrung hineingesteckt und bedarfsweise von dem Bohrschaft 12 in die in Fig. 4a dargestellte Anlage an der Sohle 19 der Vorbohrung 17 gedrückt. Der in die Vorbohrung 17 eingeschobene Bohrschaft 12 liegt während des Einschiebens mit seinem Außenumfang 16 an der Innenwand 17" der Vorbohrung 17 an, weil die wegen der Tiefe der Hinterschneidung 36 radial vorspringende Seitenschneide 15 über den Außenumfang des Bohrschafts 12 vorspringt. Der Querschnitt des Bohrschaftes 12 auf Höhe des radial größten Vorsprungs der Seitenschneide 15 ist also so bemessen, daß sein größter Durchmesser den Durchmesser der Vorbohrung 17 nicht übersteigt.

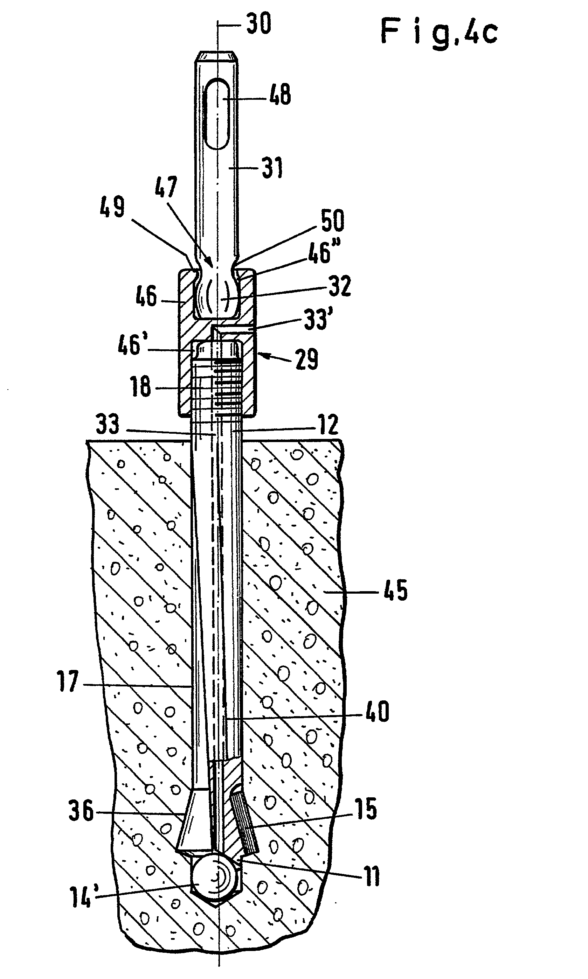

Die Schrägfläche 13 erstreckt sich vom abgeflachten Umfang 16 aus zur Mittelachse 25 der Vorbohrung 17 hin und etwas darüber hinaus, so daß gewährleistet ist, daß die Schrägfläche 13 zuerst auf einem der Schneidkante 51 zugewendeten Abschnitt der Kugel 14' aufsitzt, so daß eine Erzeugung einer radialen Kraftkomponente in Richtung der vorspringenden Seitenschneide 15 bewirkt wird. Bei axialer Beaufschlagung des Bohrschaftes 12 in Richtung des Pfeils 35 der Fig. 4a,b schneidet sich die Schneidkante 15 infolge des radialen Vortriebs zunehmend in den Werkstoff 45 ein, bis die aus Fig. 4c in ihrer endgültigen Gestalt dargestellte Hinterschneidung 36 fertiggestellt ist.

Während des radialen Eindringens der Schneidkante 15 in den Werkstoff 45 verlagert sich der Bohrerschaft 12 in aus den Fig. 4a bis 4c ersichtlichem Maße axial einwärts, wobei seine Schrägfläche 13 auf der Kugel 14' abgleitet.

Während des axialen und radialen Eindringens des Bohrschafts 12 in die Vorbohrung 17 bzw. in den Werkstoff 45 vollführt er kreisende Taumelbewegungen. Dabei ist er im Anfangsbereich der Vorbohrung 17 am Werkstoff 45 abgestützt. Infolgedessen vollführt die sich drehende Antriebsmaschine des Bohrschafts 12 entsprechende Taumelbewegungen, die bei wachsender radialer Exzentrizität der Taumelbewegung stören können, da sie das sichere Halten der Antriebsmaschine zu beeinträchtigen vermögen. Um diese Beeinträchtigung zu vermeiden, ist, wenn die Antriebsmaschine nicht eine entsprechende Ausgleichsvorrichtung aufweist, eine Verbindungskupplung 29 vorhanden, die den Bohrschaft 12 mit einer Antriebswelle 31 begrenzt gelenkig verbindet.

In Fig. 4c hat die Verbindungskupplung 29 ein im Querschnitt H-förmiges Kupplungsteil 46, das eine Aufnahmebohrung 46' zur drehfesten Aufnahme des Antriebsanschlusses 18 des Bohrschafts 12 aufweist, nämlich ein nicht dargestelltes Innengewinde in Verbindung mit einer Bohrungsendfläche zur Anlage an der Axialbeaufschlagungsfläche 54 des Bohrschafts 12. Des weiteren hat das Kupplungsstück 46 eine mit der Aufnahmebohrung 46' gleichachsige weitere, entgegengesetzt gerichtete Aufnahmebohrung 46", in die ein Kupplungsende 47 einer Antriebswelle 31 gelenkig paßt, deren mit einer Nut 48 versehenes anderes Ende in eine Aufnahme einer Antriebsmaschine eingebaut werden kann. Die Verbindung zwischen dem Kupplungsende 47 und dem Kupplungsstück 46 erfolgt über einen Sechskant 32 drehfest, wobei der Sechskant 32 an seinem Außenumfang axial leicht ballig ausgebildet ist, wodurch die erforderliche begrenzte Schwenkbewegung des Kupplungsstücks 46 relativ zu der Antriebswelle 31 ermöglicht wird. Zum Zusammenhalt der beiden Bauteile greift ein Ringbund 49 des Kupplungsstücks 46 in eine entsprechende, eine Relativbewegung der Antriebswelle 31 ermöglichende Hinterschneidung 50.

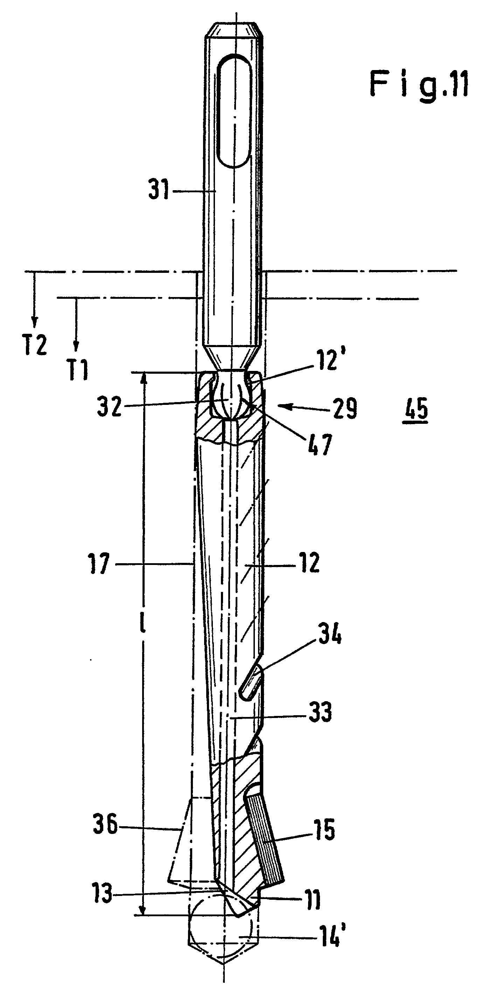

Gemäß Fig. 11 ist die Verbindungskupplung 29 innerhalb der Vorbohrung 17 angeordnet, wenn sich der Bohrschaft 12 in einer in Fig. 11 dargestellten Bohrlage befindet. Der Antriebsanschluß 18 des Bohrschafts 12 hat eine Aufnahmebohrung 12', die in ihrer grundsätzlichen Ausgestaltung der Aufnahmebohrung 46"des in Fig. 4c dargestellten Kupplungsstücks 46 entspricht. Das Kupplungsende 47 der Antriebswelle 31 ist daran angepaßt ausgebildet und ermöglicht im erforderlichen Maße begrenzt gelenkige Bewegungen zwischen den Bauteilen 12,31. Unabhängig von der Tiefe T1, T2 der Vorbohrung 17 kann die Länge 1 des Bohrschafts 12 stets gleich bleiben, wobei lediglich darauf zu achten ist, daß die Antriebswelle 31 genügend lang ist.

Erforderlichenfalls sind längere Antriebswellen 31 oder Verlängerungen erforderlich. Bei im Inneren der Vorbohrung 17 befindlicher Verbindungskupplung 29 ergibt sich der weitere Vorteil, daß die Vorbohrung 17 durch das Vorbohren exakt den zur radialen Halterung des Bohrschafts 12 erforderlichen Durchmesser hat.

Um die Taumelbewegungen des Bohrschafts 12 zu ermöglichen, ist sein oberes Ende ballig verjüngt.

Die in den Fig. 5 bis 7 dargestellten Seitenschneiden 15 sind unterschiedlich ausgebildet, und zwar entsprechend den Formen der herzustellenden Hinterschneidungen 36' bis 36". Dementsprechend weist die Seitenschneide 15 der Fig. 5 eine der Bohrschaftspitze 11 zugeneigte und eine in gleichem Maße von dieser Bohrschaftspitze 11 weggeneigte gerade Schneidkante 26 bzw. 27 auf. Die Seitenschneide 15 der Fig. 6 hat lediglich eine von der Bohrschaftspitze 11 weggeneigte Schneidkante 27, wobei der kurze Kantenabschnitt 51' einem etwas vergrößerten Kantenabschnitt 51 der Seitenschneide 15 der Fig. 1 entspricht. Fig. 7 zeigt eine Seitenschneide 15 mit einer der Bohrschaftspitze 11 zugeneigten Schneidkante 26 und einem der Bohrschaftachse 25 parallelen Schneidkantenabschnitt 28, um den zylindrischen Wandabschnitt 52 der Hinterschneidung 36" zu erzeugen. Die durch diesen Abschnitt 52 bedingte größere axiale Länge läßt bei der Gestaltung des in die fertige Bohrung einzusetzenden Dübels größere Freiheit.

Die Fig. 8 bis 10 zeigen Bohrschäfte 12 mit identisch gestalteten Seitenschneiden 15, jedoch unterschiedlich ausgebildeten Spitzen 11' bis 11". Diese Unterschiedlichkeit wird durch die in den Figuren dargestellten unterschiedlichen Druckstücke 14 bedingt, die jeweils Zylinderstücke 14" mit bohrschaftseitig unterschiedlicher Ausgestaltung sind.

Das Zylinderstück 14" der Fig. 8 hat ein bohrerschaftseitiges Druckstückteil 21, welches kegelförmig vorspringt. Dementsprechend ist die Schrägfläche 13 der Spitze 11' kegelförmig rückspringend und stützt sich beim Bohren großflächig auf dem Druckstückteil 21 ab, insbesondere wenn eine große radiale Auslenkung der Bohrschaftspitze 11' bzw. der Seitenschneide 15 entsprechend große axiale Vorschubkräfte erfordert und die Belastung der Spitze 11' daher hoch ist.

Das Druckstückteil 22 des Zylinderstücks 14'' der Fig. 9 weist eine ebene Schrägfläche 24 auf, auf der eine entsprechend eben gestaltete Schrägfläche 13 der Spitze 11'' im wesentlichen eben aufliegt, also bei geringer Flächenpressung. Hinzu kommt, daß zwischen den Schrägflächen 13, 24 die bei den anderen Druckstücken 14 vorhandene Relativbewegung nicht auftritt, denn die Bohrspitze 11'' dreht das Zylinderstück 14'' der Fig. 9 mit, so daß die Relativbewegung zwischen dem Druckstück 14 und der Sohle 19 der Vorbohrung erfolgt.

Das Druckstückteil 23 des Zylinderstücks 14 der Fig. 10 ist rückspringend kegelförmig ausgebildet, also mit einer Ausnehmung 23' versehen, in die die Spitze 11''' des Bohrschafts 12 bei dessen axialem Vorschub zunehmend eintaucht, wodurch die radiale Auslenkung des Bohrschafts 12 bewirkt wird.

Allen Druckstücken 14 ist ein der Sohle 19 der Vorbohrung 17 zugekehrtes Druckstückteil 20 gemeinsam, das der Spitze 17' der Vorbohrung 17 entsprechend rotationssymmetrisch geformt ist, also kegelförmig.

Während die Schrägflächen 13 der Bohrschäfte 12 der Fig. 8, 9 entsprechend der Schrägfläche 13 des Bohrschafts 12 der Fig. 1, 2 von dem abgeflachten Umfang 16 radial bis über die Mittelachse 25 der Vorbohrung 17 vorspringen, ist die Schrägfläche 13 bei dem Bohrschaft 12 der Fig. 10 nur vergleichsweise kurz, um sicherzustellen, daß der Bohrschaft 12 genügend weit in das Innere der Ausnehmung 23' vorgeschoben werden kann und dabei die aus der Fig. 10 ersichtliche Lage erreicht.

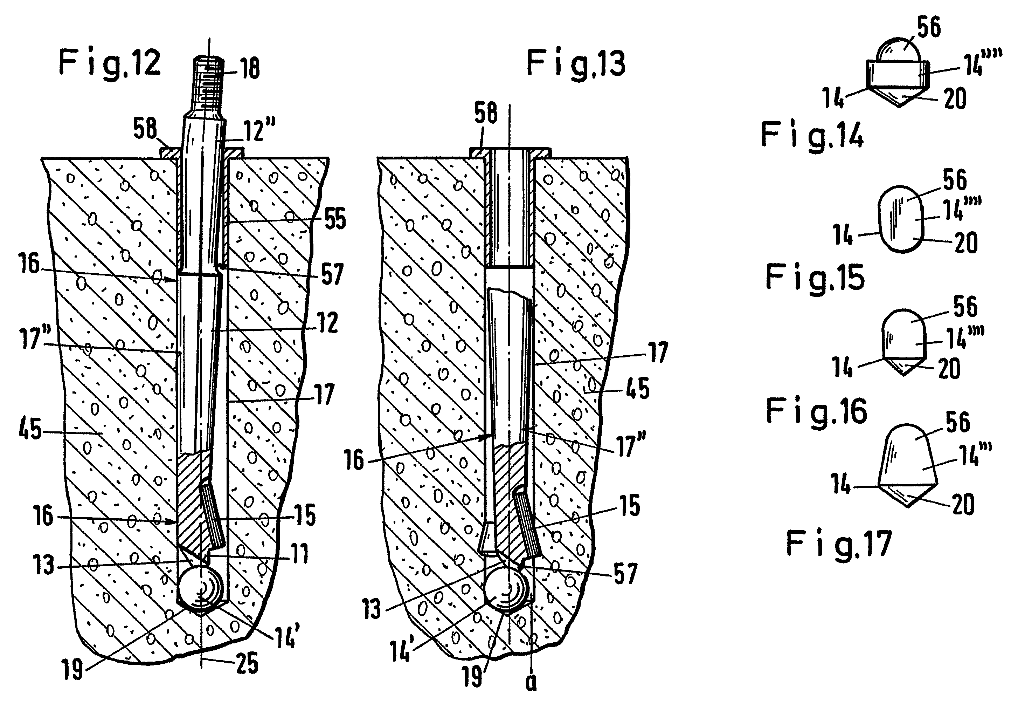

Den Druckstücken 14 der Fig. 14 bis 17 ist gemeinsam, daß sie zwischen die Enden des Druckstücks 14 bildenden Druckstückteilen jeweils ein Zylinderstück 14^IV bzw. ein Kegelstumpfstück 14''' aufweisen. Diese gestatten, dem Druckstück die gewünschte bzw. erforderliche Länge zu geben. Die Zylinderstücke 14^IV gestatten es insbesondere, nämlich mit ihrer Außenumfangsfläche, die Druckstücke 14 in den Vorbohrungen radial festzulegen, so daß insbesondere die Beanspruchungen der das Druckstück 14 haltenden Abschnitte der Innenwand 17'' der Vorbohrung 17 insbesondere bei schlagendem Antrieb des Bohrwerkzeugs geringer belastet werden. Das gilt entsprechend auch für die Druckstücke 14 der Fig. 8 bis 10. Sämtliche Druckstücke 14 der Fig. 14 bis 17 weisen ein halbkugeliges Druckstückteil 56 auf, welches in Verbindung mit einer Schrägfläche 13 eines Bohrwerkzeugs dessen entsprechend radiale Auslenkung bei Axialbeaufschlagung in Richtung 35 bewirkt. In den Fig. 14, 17 ist der Radius des halbkugeligen Druckstückteils 56 kleiner als der Radius des Außenumfangs des Zylinderstücks 14^IV bzw. als der größte Radius des Kegelstumpfstücks 14''' in Fig. 17. Der in Rede stehende Radius der Druckstückteile 56 ist also kleiner, als der Radius der Vorbohrung 17. Dementsprechend können auch die Radien der Druckstückteile 56 der Fig. 15, 16 und auch die Radien der zu diesen Druckstücken 14 gehörigen Zylinderstücke 14^IV entsprechend kleiner sein, als der Radius der Vorbohrung 17. Auch aus den verschiedenen vorbeschriebenen Figuren ist ersichtlich, daß der Radius des Druckstücks 14 bzw. der Kugel 14' kleiner ist, als der Radius der Vorbohrung 17. Die Kugel 14' kann innerhalb der Vorbohrung 17 infolgedessen die dargestellte außermittige Lage einnehmen, also gem. Fig. 13 Abstand a zum benachbarten Wandabschnitt der Innenwand 17'' der Vorbohrung 17 aufweisen. Bei einer derartigen Lage ist die Schrägfläche, welche die Kugel 14' der benachbarten Schrägfläche 13 des Bohrschaftes 12 bietet, stärker gegen die Richtung 35 der Achse der Vorbohrung 17 geneigt, als wenn die Kugel 14' den Radius der Vorbohrung 17 hätte. Infolgedessen wird die axiale Beanspruchung der Vorderkante 57 der Schrägfläche 13, vgl. Fig. 13, herabgesetzt, bzw. diese Vorderkante 57 kann weiter radial einwärts liegen, so daß sich eine größere Hinterschneidungstiefe mit der Seitenschneide 15 erzielen läßt.

Die Druckstückteile 20 der Druckstücke 14 der Fig. 14 bis 17 sind entsprechend den Druckstückteilen 20 der Druckstücke 14 der Fig. 8 bis 10 kegelig ausgebildet, oder halbkugelig, wie Fig. 15 zeigt, oder ballig.

In den Fig. 12, 13 ist ein Bohrwerkzeug dargestellt, und zwar in einer Anordnung gemäß Fig. 4a,c. Dieses Bohrwerkzeug der Fig. 12 unterscheidet sich von dem der Fig. 4a nicht, außer durch eine besondere Ausgestaltung im Anfangsbereich der Vorbohrung 17. Hier weist der Bohrschaft 12 einen Absatz 57 auf, damit eine Ringkragenhülse 58 um das obere Ende des Bohrschafts 12 herum und innerhalb des Anfangsbereichs der Vorbohrung 17 angeordnet werden kann. Der Absatz 57 ist radial also etwa so tief, wie die Wandstärke der Hülse 58 innerhalb der Vorbohrung 17. Das abgesetzte Ende 12'' des Bohrers ist ebenfalls abgeflacht, wobei diese Abflachung der Abflachung des Bohrschafts 12 außerhalb des Absatzes 57 entsprechend ausgebildet ist, also mit gleichem Abflachungswinkel, mit derselben Radienachse und nicht winkelversetzt. Infolgedessen liegen die Abflachungsflächen des Bohrerschafts 12 und des Bohrschaftendes 12'' in gleichem Maße parallel zu der Innenwand 17'' der Vorbohrung 17, nur daß durch die Abflachung des Bohrschaftendes 12'' Platz für die Ringkragenhülse 58 geschaffen wurde. Beim Antrieb des Bohrwerkzeugs stützt sich dieses nicht mehr am Werkstoff 45 ab, sondern an der Ringkragenhülse 58. Der Anfangsbereich der Vorbohrung 17 kann infolgedessen nicht ausschlagen, wodurch bei bestimmten Anwendungsfällen eine einwandfreie Führung des Bohrschafts 12 gewährleistet ist.

In den Fig. 1 und 11 ist der Bohrschaft 12 mit einer Luftbohrung 33 versehen, die jeweils von der Spitze 11 bis zu seinem Antriebsanschluß 18 bzw. der Axialbeaufschlagungsfläche 54 längs durchläuft. Diese Luftbohrung 33 gewährleistet ausreichenden Luftzutritt oder ausreichende Luftabfuhr auch dann, wenn die im nicht abgeflachten Außenumfang spiralig angeordneten Bohrstaubfördernutabschnitte 34 mit zu förderndem Bohrstaub vollgesetzt sind und die Anlage des Bohrschafts 12 in der Vorbohrung 17 in seinem oberen Bereich so dicht ist, daß sonst eine Behinderung des Transports des Bohrstaubs auftreten würde.

Bei dem Bohrschaft 12 der Fig. 11 mündet die Luftbohrung 33 in die Aufnahmeöffnung 12'. Im Falle der Fig. 4c ist auf das Kupplungsstück 46 mit einem den Luftzutritt ermöglichenden bzw. erleichternden Winkelbohrungsabschnitt 33' versehen.

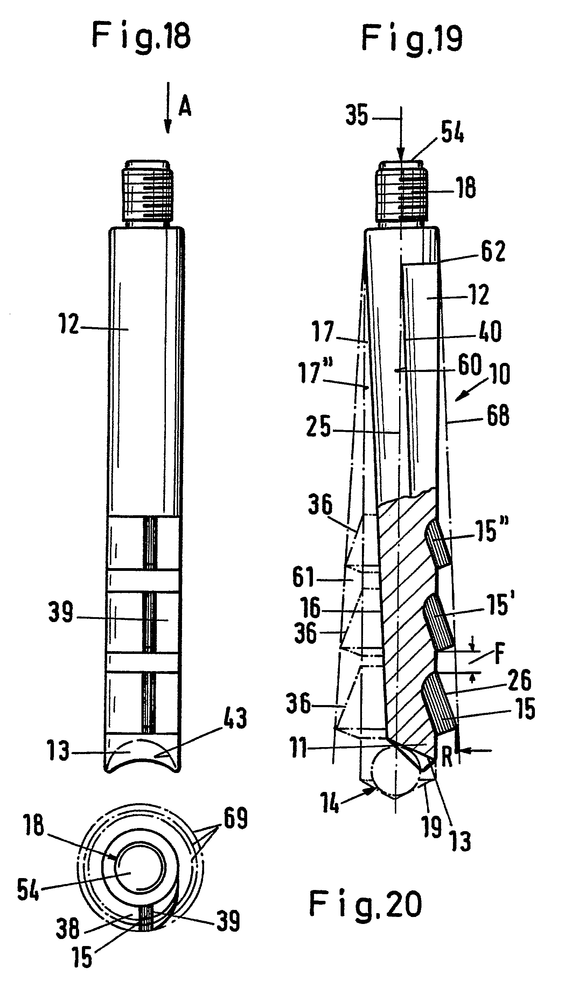

Die unterste Seitenschneide 15 in Fig. 18 bis 20 ist bezüglich der Schrägfläche 13 überlappungsfrei angeordnet, daß heißt, sie ist horizontal gesehen höher angeordnet, als der oberste Bereich der Schrägfläche 13, was sich insbesondere aus Fig. 19 ergibt, wonach die Begrenzungskante 43 der Schrägfläche 13 die Unterkante der unteren Seitenschneide 15 nicht erreicht. Diese Ausbildung des Bohrwerkzeugs dient insbesondere der Stabilität im Bereich der Bohrschaftspitze 11, welche durch den schlagenden Vorschub des Bohrwerkzeugs 10 stark beansprucht wird. Auch die Befestigung der Seitenschneide 15, beispielsweise eines in den Bohrschaft 12 eingelöteten Hartmetallplättchens, wird durch die vorbeschriebene Ausbildung des Bohrwerkzeugs 10 weniger beansprucht.

Axial oberhalb der untersten Seitenschneide 15 sind weitere Seitenschneiden 15', 15" mit Abstand voneinander angeordnet. Die Übereinanderanordnung der Seitenschneiden 15 bis 15" ist so getroffen, daß sie in einer Flucht liegen. Das ergibt sich insbesondere auch aus Fig. 18. Infolge dieser Anordnung sind sämtliche Seitenschneiden 15 bis 15" dem abgeflachten Umfang 16 gegenüber angeordnet, wie sich insbesondere aus Fig. 19 ergibt. Die Seitenschneiden 15 bis 15" sind einzelne Hartmetallstücke, die einen Abstand F zwischen sich aufweisen. Dieser Abstand F wird so bemessen, daß der Materialwulst 61 zwischen zwei Hinterschneidungen 36 die gewünschte axiale Erstreckung hat. Diese hängt im wesentlichen von den Eigenschaften des Werkstoffs ab, in dem die Hinterschneidungen hergestellt werden sollen.

Der Radialvorstand R ist bei den Seitenschneiden 15 bis 15" unterschiedlich groß. Den größten Radialvorstand R hat die Seitenschneide 15. Die Radialvorstände der Seitenschneiden 15', 15" sind zum antriebsanschlußseitigen Bohrschaftende hin linear abnehmend geringer. Der Abstand der Spitzen aller Seitenschneiden 15 bis 15" von dem abgeflachtem Umfang 16 des Bohrschafts 12, also der Mindestabstand, ist jeweils gleich groß, nämlich gleich dem Durchmesser der Vorbohrung 17. Infolgedessen kann der Bohrschaft 12 mit seinen Seitenschneiden 15 bis 15" innerhalb der Vorbohrung 17 axial bewegt werden. In der Fig. 19 wird darüberhinaus veranschaulicht, daß die Spitzen aller Seitenschneiden auf einer Linie 68 angeordnet sind, die der Längslinie des abgeflachten Umfangs 16 des Bohrschafts parallel ist. Diese Linie 68 bildet bei Rotation des Bohrschafts 12 und maximaler radialer Auslenkung der Seitenschneiden 15 bis 15" die kegelige Umhüllende aller Hinterschneidungen 36, die infolgedessen zum anschlußseitigen Ende des Bohrschafts 12 entsprechend flacher sind. Das Volumen aller Hinterschneidungen 36 ist jedoch bei der dargestellten Ausbildung des Bohrwerkzeugs 10 so groß wie möglich, so daß infolgedessen soviel Klebeankermasse wie möglich radial in die fertiggestellte Bohrung gelangt und dort für maximale Auszugfestigkeit sorgt. Wenn das Volumen der Hinterschneidungen nicht maximal sein muß, braucht die Linie 68 der Längslinie des abgeflachten Umfangs 16 des Bohrschafts 12 nicht parallel zu sein, sondern kann mit letzterer einen spitzen Winkel bilden. Infolgedessen ist der Radialvorstand R der Seitenschneiden 15 bis 15" in gleichem Maße kleiner. Es ist aber auch möglich, daß nur der Radialvorstand der Seitenschneiden 15, 15' verringert ist, wobei im Extremfall die Spitzen der Seitenschneiden 15 bis 15" bei der Anordnung des Bohrschafts 12 gemäß Fig. 19 auf einer der Bohrschaftachse 25 parallelen Linie angeordnet sind.

Fig. 20 zeigt in der Aufsicht in Richtung A in Fig. 18, daß die Seitenschneiden 15 bis 15" radial unterschiedlich weit vorspringen und dementsprechend unterschiedlich große Schneidkreise 69 haben.

Aus Fig. 19 ist ersichtlich, daß der Durchmesser des kugelförmigen Druckstücks 14 erheblich kleiner ist, als der Durchmesser der Vorbohrung 17. Diese Ausgestaltung des Druckstücks 14 hat den Vorteil, daß der Bohrschaft 12 mit seiner Schrägfläche 13 wegen des geringeren Krümmungsradius des Druckstücks 14 größere Radialkräfte erzeugen kann. Hierdurch wird das radiale Eindringen der Seitenschneiden 15 bis 15" erleichtert bzw. die Beanspruchung der Schrägfläche 13 des Bohrschafts 12 verringert.

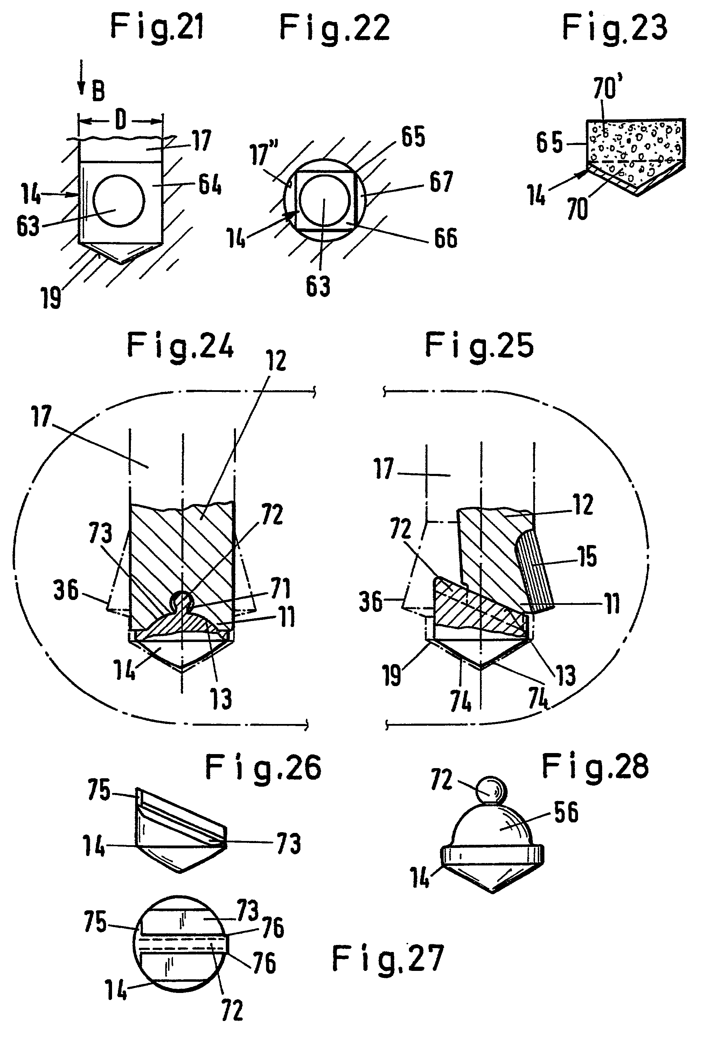

Gemäß den Fig. 21, 22 das Druckstück 14 in besonderer Weise mit einem Widerlagerkern 63 ausgebildet, welcher kugelförmig ist. Der größte Durchmesser ist gemäß Fig. 21 kleiner, als der Durchmesser D der Vorbohrung 17. Außerdem hat das Druckstück 14 eine Umkleidung 64, die nachgiebig ist und beispielsweise aus Kunststoff besteht. Als Kunststoff kommt beispielsweise Polystyrolschaum infrage, der nicht schlagfest ist. Bei der Beaufschlagung des Druckstücks 14 durch den Bohrschaft 12 wird also die Umkleidung 64 sehr schnell zerstört und mit dem von den Seitenschneiden 15 bis 15" erzeugten Bohrstaub abgeführt. Die Umkleidung 64 wird insbesondere so gestaltet, daß sie einen Klemmbereich 65 hat. Dieser Klemmbereich 65 gestattet die Festlegung des Druckstücks 14 derart, daß dieses nicht durch Eigengewicht aus der Vorbohrung 17 herausfallen kann. Das ist insbesondere beim Überkopfarbeiten von Bedeutung, wenn also Hinterschneidungen in Bohrungen hergestellt werden sollen, die in Gebäudedecken vorhanden sind. In diesem Fall wird das Druckstück 14 in die Vorbohrung 17 eingesteckt und bleibt dort klemmen.

Die Fig. 21, 22 zeigen eine besondere Ausbildung eines Druckstücks 14 in Würfelform, wobei der Widerlagerkern 63 kugelförmig ist. Die Würfelform bewirkt, daß das Druckstück 14 nur mit seinen Würfelkanten 66 an der Innenwand 17" der Vorbohrung 17 klemmt. Außerdem wird durch die Würfelform der Umkleidung 64 gegenüber deren kugelförmiger Gestaltung Werkstoff gespart, wie die zwischen dem Druckstück 14 und der Innenwand 17" der zylindrischen Vorbohrung 17 freibleibenden Räume 67 in Fig. 22 zeigen.

Das in Fig. 23 dargestellte Druckstück 14 ist im wesentlichen ein V-förmiger Rotationskörper. Es hat eine an allen Stellen gleichgroße Wandstärke, so daß es vorzugsweise als Blechstanzteil herstellbar ist und mithin einen entsprechend geringen Werkstoffaufwand hat. In seiner Funktion bezüglich der Radialverschiebung des Bohrschafts 12 entspricht es dem in der Haupterfindung in Fig. 27 dargestellten Druckstück, wobei die Bohrschaftspitze so ausgebildet ist, daß sie bei Axialbeaufschlagung des Bohrschafts radial nach innen abrutscht. Dabei und infolge des schlagenden Antriebs zerstört sie den aus Fig. 23 ersichtlichen Füllkörper 70, der das Innere des Rotationskörpers ausfüllt und darüber hinaus einen kreiszylindrischen oder würfelförmigen Füllstückteil 70' hat, der das Druckstück 14 in der Vorbohrung 17 axial so führen kann, daß es nicht kippt, sondern seine ordnungsgemäße Lage an der Sohle 19 der Vorbohrung 17 einnimmt. Wenn der Außendurchmesser des Füllkörpers 70 etwas größer als der Innendurchmesser der Vorbohrung 17 bemessen ist, weist dieser Füllkörper mithin einen Klemmbereich 65 auf, der das Festlegen des Druckstücks 14 in der Vorbohrung 17 gestattet, beispielsweise bei Überkopfbetrieb.

Die Fig. 24, 25 betreffen dieselbe Bohrschaftspitze 11 mit einer einzigen Seitenschneide 15 als Beispiel. Es versteht sich, daß auch mehrere Seitenschneiden übereinander angeordnet sein können, z. B. gemäß Fig. 19. An der Bohrschaftspitze 11 bzw. an dessen Schrägfläche 13 ist ein Druckstück 14 so befestigt, daß in axialer Richtung ein dauerhafter Zusammenhalt gegeben ist. Infolgedessen kann der Bohrschaft 12 axial in die Vorbohrung 17 hineingesteckt und aus dieser herausgezogen werden ohne daß vorher und/oder nachher etwaige Manipulationen bezüglich der Einbringung des Druckstücks bzw. dessen Verbleib in die bzw. in der Vorbohrung 17 durchgeführt werden müßten. Das Druckstück 14 ist infolge seiner dauerhaften Befestigung an der Bohrschaftspitze 11 zur ständigen Verwendung in Verbindung mit dem Bohrschaft 12 bestimmt und muß daher besonders widerstandsfähig sein. Es ist infolgedessen vorzugsweise als vergütetes Schmiedeteil ausgebildet. Auch ein Feingußteil mit entsprechenden Eigenschaften ist verwendbar.

Der Zusammenbau des Druckstücks 14 mit der Schrägfläche 13 ist dergestalt, daß sich beide in radialer Richtung relativ zueinander bewegen können. Hierzu hat die Bohrschaftspitze 11 eine hinterschnittene Führungsnut 71, die gemäß den Fig. 24, 25 schrägflächenparallel ist, also dieselbe Neigung gegen die Bohrschaftachse aufweist, wie die Schrägfläche 13. In diese Führungsnut 71 greift ein Kupplungsvorsprung 72 ein, und zwar vorzugsweise axial formschlüssig. Dieser Kupplungsvorsprung 72 ist leistenartig ausgebildet und dabei zugleich hinterschnitten, so daß die beiden Kupplungsteile 71, 72 zum Zusammenbau in der Darstellungsebene der Fig. 25 zusammengeschoben werden müssen.

Desweiteren ist aus Fig. 24 ersichtlich, daß das Kupplungsstück 14 eine Gleitfläche 73 aufweist, die den Kupplungsvorsprung 72 trägt. Diese Gleitfläche 73 verläuft in der Radialbewegungsrichtung, in der die Relativverschiebungen zwischen dem Druckstück 14 und der Bohrschaftspitze 11 stattfindet. Quer dazu ist die Gleitfläche 73 gewölbt und die Fig. 24, 25 zeigen, daß die Schrägfläche 13 entsprechend gewölbt ist.

Fig. 24 zeigt, daß der Kupplungsvorsprung 72 axial, aber auch radial ein begrenztes Bewegungsspiel aufweist, demgemäß sich das Druckstück 14 und die Bohrschaftspitze 11 relativ zueinander bewegen können. Durch dieses Bewegungsspiel wird gewährleistet, daß beim Bohrvorgang entstehender Bohrstaub auf der Gleitfläche 73 nicht zu einer Überbeanspruchung der Kupplungsteile 71, 72 bzw. zu deren Verklemmen führt. Die Kupplungsteile 71, 72 werden darüberhinaus dadurch entlastet, daß die beim Drehantrieb des Bohrschafts 12 auftretenden Drehmitnahmekräfte direkt von der Bohrspitze 11 über deren Schrägfläche 13 auf die gewölbte Gleitfläche 73 des Druckstücks 14 übertragen werden.

Aufgrund der Radialbewegung der Bohrschaftspitze 11 und der damit verbundenen Axialbelastung des Druckstücks 14 ist nicht auszuschließen, daß dieses eine kreiselartige Drehbewegung ausführt. Um diese Bewegung zu erleichtern, ist der maximale Außendurchmesser des Druckstücks 14 etwas kleiner, als der Durchmesser der Vorbohrung 17 und vor allem ist die Druckstückspitze mit ihren Auflageflächen 74 konvex gewölbt.

Die Fig. 26, 27 zeigen ein grundsätzlich dem Druckstück 14 der Fig. 7, 8 entsprechendes Druckstück 14 mit Möglichkeit zur Dauerbefestigung an der Bohrschaftspitze 11. Das Druckstück 14 hat also eine Hinterschnittleiste als Kupplungsvorsprung 72. An einem Leistenende ist ein Quervorsprung 75 vorgesehen, der die Breite der Führungsnut 71 übersteigt. Am anderen Leistenende sind vorstehende Kanten 76 vorhanden, die einen Verformungsbereich bilden. Zum dauerhaften Zusammenbau wird das Druckstück 14 mit der Bohrschaftspitze 11 wie vorbeschrieben zusammengesteckt und die Kanten 76 werden so umgeschlagen, daß sie quer zur Führungsnut 71 darüberhinaus vorspringen.

Die Fig. 26, 27 lassen in Seitenansicht und Aufsicht die gewölbte Gleitfläche 73 des Druckstücks 14 deutlich erkennen.

Fig. 28 zeigt ein Druckstück 14, welches der in Fig. 14 dargestellten Druckstück entspricht. Zusätzlich ist jedoch ein Kupplungsvorsprung 72 vorhanden, der kugelkopf- bzw. pilzartig ausgebildet ist. Mit diesem Kupplungsvorsprung 72 kann das Kupplungsstück 14 in die Führungsnut 71 der Bohrschaftspitze 11 eingebaut werden, wobei sich deren Schrägfläche 13 auf dem halbkugeligen Druckstückteil 56 abzustützen vermag. Um das Druckstück 14 dauerhaft an der Bohrschaftspitze 11 befestigen zu können, werden die die Endbereiche der Führungsnut 71 bildenden Teile der Bohrschaftspitze 11 so umgeschlagen, daß der Kupplungsvorsprung 72 nicht radial aus der Führungsnut herausrutschen kann.

Der pilzartige Kupplungsvorsprung 72 behindert die Rotation der Bohrschaftspitze nicht, wobei das Druckstück 14 unbewegt gegen die Sohle 19 der Vorbohrung 17 gedrückt wird oder bei entsprechender Exzentrizität, welche das Bewegungsspiel zwischen dem Druckstück 14 und der Bohrschaftspitze 11 übersteigt, eine leichte Taumelbewegung ausführt. Hierzu kann der größte Außendurchmesser des Druckstücks 14 etwas kleiner als der Durchmesser der Vorbohrung 17 gehalten werden bzw. die Druckstückspitze wird gemäß Fig. 25 konvex gewölbt ausgebildet.

An seinem antriebsseitigen Ende bzw. in der Nähe des Antriebsanschlusses 18 hat das Bohrwerkzeug bzw. der Bohrschaft 12 einen Markierungsschneider 80, der im wesentlichen aus einem Ringbund 81 und einer Schneide 82 in Gestalt eines Stifts besteht. Der Ringbund 81 springt radial über den Außendurchmesser des Bohrschafts vor, und überdeckt die Schneide 82, die in eine Bohrung des Bohrschafts 12 eingesetzt und darin befestigt ist, z. B. mittels Preßsitz. Der Ringbund 81 ist der Schneide 82 dicht benachbart und stützt diese gegen vertikal nach oben gerichtete Belastungen ab. Der Ringbund 81 ist auf einem abgesetzten Kragen 85 des Bohrschaftes 12 angeordnet. Die Aufnahme der Antriebsmaschine wird soweit auf den Antriebsanschluß 18 geschraubt, daß sie an der Oberseite 86 des Ringbunds 81 anliegt und diesen axial gegen den Bohrerschaft 12 drückt. Die Befestigung des Ringbundes 81 am Bohrschaftende braucht keine besonderen Axialbelastungen aufzunehmen.

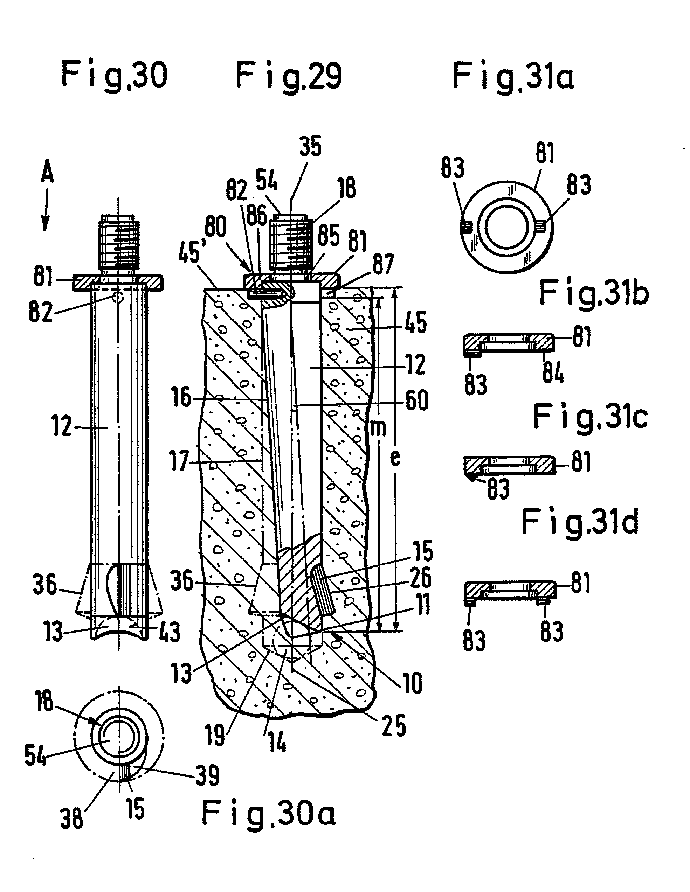

Fig. 29 zeigt, daß der Abstand m des Markierungsschneiders 80 von der Bohrschaftspitze 11 kleiner ist, als die Eintauchtiefe e des Bohrschafts 12.

Fig. 31b zeigt einen Ringbund 81, der an seinem seitlichen Überstand 84 an einer Stelle eine Schneide 83 trägt. Diese Schneide 83 ist beispielsweise ein Hartmetallstück. Es ist in der Darstellung der Fig. 31b rechteckig und in übliche Weise am Ringbund 81 befestigt, z. B. durch Hartlöten. Fig. 31c zeigt eine Schneide 83, die anders profiliert ist, nämlich dreieckig. Diese Schneide 83 der Fig. 31c wird eine entsprechende Markierung in den Werkstoff 45 schneiden.

Fig. 31d zeigt einen Ringbund 81, der mit zwei Schneiden 83 bestückt ist. Diese beiden Schneiden 83 liegen gemäß Fig. 31a einander diagonal gegenüber, so daß beim Bohren etwa gleichgroße Kräfte auf den Bohrschaft in entgegengesetzter Richtung einwirken, was zu einer etwa symmetrischen Belastung führt. Eine vollständige Symmetrie kann jedoch nicht erreicht werden, weil die Schneiden 83 auf unterschiedlichen Radien liegen. Infolge der unterschiedlichen Radien wird eine entsprechend großflächige Markierung hergestellt, da die Schneidbahnen einander benachbart sind. Aus Fig. 31d ist ersichtlich, daß die Schneidbahnen dieser Schneiden 83 unterschiedlich tief sind, so daß außerdem eine weitere gestaltungsmäßige Kennzeichnung der Markierungsfläche möglich ist.

Das Bohrwerkzeug wird betrieben, indem zunächst das Druckstück 14 in die zylindrische Vorbohrung 17 hineingesteckt und von dem Bohrschaft 12 gegen die Sohle 19 der Vorbohrung 17 gedrückt wird. Fig. 4a zeigt eine Anfangslage, in der die Seitenschneide 15 noch nicht radial beaufschlagt und eine Hinterschneidung infolgedessen noch nicht entstanden ist. Der in die Vorbohrung 17 eingeschobene Bohrschaft 12 liegt während des Einschiebens mit seinem abgeflachten Außenumfang 16 an der Innenwand 17″ der Vorbohrung 17 an, weil die zur Erzeugung der Hinterschneidung 36 radial vorspringende Seitenschneide 15 über den Außenumfang des Bohrschafts 12 vorspringt. Der Durchmesser des Bohrwerkzeugs im Bereich des maximalen Vorsprungs der Seitenschneide 15 darf also den Innendurchmesser der Vorbohrung 17 nicht erreichen, damit das Bohrwerkzeug axial verschieblich ist. Bei weiterer axialer Beaufschlagung stützt sich die Spitze 11 mit der Schrägfläche 13 auf dem Druckstück 14 ab, so daß eine radiale Kraftkomponente erzeugt wird, die die Schneidkante 15 zunehmend in den Werkstoff 45 hineintreibt. Fig. 4b zeigt ein Zwischenstadium zwischen Fig. 4a und Fig. 29, die eine fertiggestellte Hinterschneidung 36 zeigt.

Während des radialen Eindringens der Schneidkante 15 in den Werkstoff 45 verlagert sich der Bohrschaft 12 axial einwärts, wobei seine Schrägfläche 13 auf dem Druckstück 14, einer Kugel, abgleitet. Aus dem Vergleich der Fig. 4a, 4b und 29 verdeutlicht sich diese axiale Bewegung. Es ist ersichtlich, daß mit anhaltender Axialbeaufschlagung in Richtung des Pfeils 35 der zunächst von der Oberfläche 45′ freie Markierungsschneider 80 in Berührung mit dieser Oberfläche 45′ kommt und sich zunehmend einschneidet, vergleiche insbesondere Fig. 4b. Bei fertiggestellter Hinterschneidung 36 hat sich der Schneider 82 vollständig in den Werkstoff 45 eingegraben, eine ringförmige Markierung 87 erzeugt und der Ringbund 81 liegt an der Oberfläche 45′ des Werkstoffs 45 an. Ein weiterer axialer Vorschub ist infolgedessen nicht mehr möglich und der Bohrende kann infolge der Anlage des Ringbundes 81 am Werkstoff 45 sicher sein, daß die Hinterschneidung 36 ordnungsgemäß hergestellt ist. Wird ein Markierungsschneider gemäß Fig. 31d verwendet, so ergibt sich der zweite, flachere Markierungsring erst, wenn die Hinterschneidung 36 eine bestimmte Mindesttiefe erreicht hat, die also durch das Vorhandensein zweier Ringe leicht kontrolliert werden kann. Eine solche Kontrolle ist im Prinzip auch mit dem Markierungsschneider gemäß Fig. 29 oder 31b möglich, nämlich durch Nachmessen der Tiefe des Markierungsrings 87, oder bei der Verwendung des Markierungsschneiders der Fig. 31c durch Nachmessen der Breite des Markierungsrings, die optisch vergleichsweise leicht erfaßbar ist.

Während des axialen und radialen Eindringens des Bohrschafts 12 in die Vorbohrung 17 bzw. in den Werkstoff 45 vollführt er kreisende Taumelbewegungen. Dabei ist er im Anfangsbereich der Vorbohrung 17 am Werkstoff 45 abgestützt. Durch diese Abstützung wird gewährleistet, daß die Markierungsschneider 80 die Markierungsringe von Loch zu Loch stets in derselben Ausgestaltung herstellen.

## Patentansprüche

1. Bohrwerkzeug zur Herstellung von Hinterschneidungen in nicht durchgehenden zylindrischen Vorbohrungen, mit einem im Durchmesser dem Durchmesser der Vorbohrung etwa entsprechenden Bohrschaft, an dessen Spitze mindestens eine radial über dessen Umfang vorstehende Seitenschneide angebracht ist und der über eine bei seiner Axialbeaufschlagung radialen Vortrieb der Seitenschneide bewirkende Schrägfläche an der Sohle der Vorbohrung insbesondere über ein Druckstück abstützbar ist, dadurch gekennzeichnet, daß die Spitze (11) des Bohrschafts (12) mit der den radialen Vortrieb der Seitenschneide (15) bewirkenden Schrägfläche (13) versehen und damit direkt an der Sohle (19) der Vorbohrung (17) oder an dem Druckstück (14) abstützbar ist, und daß der etwa vorbohrungsstarke Bohrschaft (12) an seinem der starr angebrachten Seitenschneide (15) gegenüberliegenden Außenumfang (16) mit einer das Einführen des Bohrschafts (12) in die Vorbohrung (17) ermöglichenden Abflachung versehen ist, die sich stufenlos mit demselben Winkel zur Bohrschaftachse (25) von der Spitze (11) des Bohrschafts (12) über dessen Länge erstreckt.

2. Bohrwerkzeug nach Anspruch 1, dadurch gekennzeichnet, daß der Bohrschaft (12) bis auf ein durch einen Antriebsanschluß (18) bedingtes kurzes Stück abgeflacht ist.

3. Bohrwerkzeug nach Anspruch 1 oder 2, dadurch gekennzeichnet, daß der Bohrschaft (12) mit seinem größten Radius (r) bei zur Seitenschneide (15) hin verlagertem Radienmittelpunkt (m) abgeflacht ist.

4. Bohrwerkzeug nach einem der Ansprüche 1 bis 3, dadurch gekennzeichnet, daß das Druckstück (14) eine Kugel (14') ist oder ein dem Bohrschaft (12) benachbartes Druckstückteil (21, 22, 23, 56) aufweist, das halbkugelig, ballig, vor- oder rückspringend kegel- oder kegelstumpfförmig ausgebildet oder mit einer über den gesamten Zylinderquerschnitt ebenen Schrägfläche (24) versehen ist und/oder das ein der Sohle (19) der Vorbohrung (17) zugekehrtes Druckstückteil (20) aufweist, das entsprechend rotationssymmetrisch, kugelig oder ballig geformt ist, wobei die beiden Druckstückteile (20 bis 23, 56) mit einem bedarfsweise zwischen ihnen angeordneten Zylinder (14″) oder Kegelstumpfstück (14‴) einstückig sind.

5. Bohrwerkzeug nach einem der Ansprüche 1 bis 4, dadurch gekennzeichnet, daß sich die Schrägfläche (13) der Bohrschaftspitze (11) vom abgeflachten Umfang (16) des Bohrschafts (12) aus zur Bohrschaftachse (25) hin und dem Druckstück (14) oder der Bohrschaftspitze (11) zugeneigt erstreckt, bei vorspringenden Druckstückenden (21, 22) über die Mittelachse (25) hinaus.

6. Bohrwerkzeug nach einem der Ansprüche 1 bis 5, dadurch gekennzeichnet, daß der Bohrschaft (12) eine in seiner Mittelachse von seiner Spitze (11) bis zu seinem Antriebsanschluß (18) längs durchlaufende Luftbohrung (33) aufweist.

7. Bohrwerkzeug nach einem der Ansprüche 1 bis 6, dadurch gekennzeichnet, daß an dem Bohrschaft (12) mindestens zwei übereinander angeordnete Seitenschneiden (15 bis 15″) vorhanden sind.

8. Bohrwerkzeug nach Anspruch 7, dadurch gekennzeichnet, daß die Seitenschneiden (15 bzw. 15″) aus einzelnen Hartmetallstücken bestehen und in einer Flucht oder innerhalb eines Winkels von etwa bis zu 30° über den Umfang verteilt angeordnet sind.

9. Bohrwerkzeug nach Anspruch 1 oder 8, dadurch gekennzeichnet, daß der größte Abstand der Seitenschneiden (15 bis 15″) zum abgeflachten Umfang (16) des Bohrschafts (12) höchstens gleich dem Durchmesser des Bohrschafts (12) ist, wobei die Spitzen aller Seitenschneiden (15 bis 15″) auf einer Linie (68) angeordnet sind, die der Längslinie des abgeflachten Umfangs (16) des Bohrschafts (12) parallel ist, oder wobei alle Seitenschneiden radial gleich weit über den Außenumfang des Bohrschafts (12) vorstehen.

10. Bohrwerkzeug nach Anspruch 7 bis 9, dadurch gekennzeichnet, daß das in die Vorbohrung (17) einzubringende, vom Bohrschaft (12) lose Druckstück (14) einen festen Widerlagerkern (63) hat, dessen größter Durchmesser kleiner als der Vorbohrungsdurchmesser ist und der zumindest teilweise nachgiebig umkleidet ist, wodurch ein Klemmbereich (65) gebildet ist.

11. Bohrwerkzeug nach einem der Ansprüche 1 bis 10, dadurch gekennzeichnet, daß das Druckstück (14) direkt an der Schrägfläche (13) der Bohrschaftspitze (11) radialbeweglich befestigt ist.

12. Bohrwerkzeug nach Anspruch 10, dadurch gekennzeichnet, daß die Befestigung des Druckstücks (14) mittels einer schrägflächenparallelen, hinterschnittenen Führungsnut (71) erfolgt, in die ein Kupplungsvorsprung (72) axial formschlüssig eingreift und/oder daß die Führungsnut (71) in die Bohrschaftspitze (11) eingearbeitet ist, und daß der Kupplungsvorsprung (72) hinterschnittleisten- oder pilzkopfartig geformt ist.

13. Bohrwerkzeug nach einem der Ansprüche 11 oder 12, dadurch gekennzeichnet, daß der Kupplungsvorsprung (72) des Druckstücks (14) auf einer in Radialbewegungsrichtung der Seitenschneide (15) verlaufenden, quer dazu gewölbten Gleitfläche (73) des Druckstücks (14) angeordnet ist, auf der die entsprechend gewölbte Schrägfläche (13) der Bohrschaftspitze (11) abstützbar ist.

14. Bohrwerkzeug nach einem der Ansprüche 10 bis 13, dadurch gekennzeichnet, daß ein Druckstück eine Hinterschnittleiste als Kupplungsvorsprung (72) aufweist, die an einem Leistenende einen angeformten Quervorsprung (75) und am anderen Leistenende einen Verformungsbereich (Kanten 76) hat, und daß das Druckstück (14) ein Schmiede- oder Feingußteil ist.

15. Bohrwerkzeug nach einem der Ansprüche 1 bis 14, dadurch gekennzeichnet, daß der Bohrschaft (12) an seinem antriebsseitigen Ende einen radial vorspringenden Markierungsschneider (80) aufweist.

**Claims**

1. Boring tool for the creation of undercuts in blind cylindrical preformed holes, comprising a drill shaft having a diameter corresponding approximately to the diameter of the preformed hole, at the tip of which shaft is fitted at least one lateral cutter projecting radially beyond the periphery of the drill shaft, the drill shaft being supportable at the bottom of the preformed hole, preferably upon a pressure member, by means of a sloping surface on the shaft which acts to cause radial advance of the lateral cutter when the drill shaft is subjected to axial impacts, characterized in that the tip (11) of the drill shaft (12) is provided with the sloping surface (13) causing the radial advance of the lateral cutter (15) is supportable directly on the bottom (19) of the preformed hole (17) or on the pressure member (14), and in that the drill shaft (12) whose thickness is approximately the width of the preformed hole is provided at its peripheral surface (16) which lies opposite the rigidly mounted lateral cutter (15) with a flattened portion which makes possible the introduction of the drill shaft (12) into the preformed hole (17), said flattened portion extending smoothly at constant angle to the drill shaft axis (25) from the tip (11) of the drill shaft (12) over its length.

2. Boring tool according to claim 1, characterized in that the drill shaft (12) is flattened as far as a short-length portion of the shaft serving as a driving shank (18).

3. Boring tool according to claim 1 or 2, characterised in that the drill shaft (12) with its maximum radius (r) is flattened with the centre of curvature (m) displaced towards the lateral cutter (15).

4. Boring tool according to one of claims 1 to 3, characterised in that the pressure member (14) is a ball (14') or has a pressure member portion (21, 22, 23, 56) adjacent to the drill shaft (12) which is hemispherical, spherical, prominently or re-entrantly conical or frusto-conical or which is provided with a plane sloping surface (24) over the whole cylindrical cross-section and/or has a pressure member portion (20) facing the bottom (19) of the preformed hole (17) which is shaped to be rotationally symmetrical, spherical or crowned as appropriate, wherein the two pressure member portions (20 to 23, 56) are in one piece with a cylindrical portion (14") or frusto-conical portion (14"') arranged therebetween as necessary.

5. Boring tool according to one of claims 1 to 4, characterised in that the sloping surface (13) of the drill shaft tip (11) extends back from the flattened peripheral portion (16) of the drill shaft (12) towards the drill shaft axis (25) and is inclined to the pressure member (14) or the drill shaft tip (11), with projecting ends of the pressure member (21, 22) extending beyond the central axis (25).

6. Boring tool according to one of claims 1 to 5, characterised in that the drill shaft (12) has an air passage (33) extending lengthwise along its central axis from its tip (11) up to its driving shank (18).

7. Boring tool according to one of claims 1 to 6, characterised in that at least two lateral cutters (15 to 15") are provided one above another on the drill shaft (12).

8. Boring tool according to claim 7, characterized in that the lateral cutters (15 and 15") consist of individual hard metal pieces and are arranged in a line or are arranged distributed around the circumference within an angle of about up to 30°.

9. Boring tool according to claim 1 or 8, characterised in that the maximum distance of the lateral cutters (15 to 15") from the flattened peripheral portion (16) of the drill shaft (12) is at maximum equal to the diameter of the drill shaft (12), wherein the tips of all the lateral cutters (15 to 15") are arranged on a line (68) which is parallel to the length line of the flattened peripheral portion (16) of the drill shaft (12), or wherein all lateral cutters project radially beyond the external periphery of the drill shaft (12) by the same amount.

10. Boring tool according to claims 7 to 9, characterised in that the pressure member (14) which is free from the drill shaft (12) and which is arranged to be introduced into the preformed hole (17) has a rigid core (63) whose maximum diameter is smaller than the diameter of the preformed hole and which is coated at least partially with yieldable material, whereby a wedging region (65) is formed on the pressure member.

11. Boring tool according to one of claims 1 to 10, characterized in that the pressure member (14) is fixed directly to the sloping surface (13) of the drill shaft tip (11) so as to be radially movable.

12. Boring tool according to claim 10, characterised in that the fixing of the pressure member (14) is effected by means of an undercut guide groove (71) which is parallel to the sloping surface and in which a coupling projection (72) engages with axial form-locking and/or that the guide groove (71) is machined into the drill shaft tip (11), and that the coupling projection (72) is shaped as an undercut rib or an undercut mushroom-shaped projection.

13. Boring tool according to one of claims 11 or 12, characterized in that the coupling projection (72) of the pressure member (14) is arranged on a sliding surface (73) of the pressure member (14) which extends in the direction of radial movement of the lateral cutter (15) and which is curved transversely to that direction, with the correspondingly curved sloping surface (13) of the drill shaft tip (11) being engageable with said sliding surface.

14. Boring tool according to one of claims 10 to 13, characterised in that a pressure member comprises an undercut rib as coupling projection (72), said projection at one rib end having a transverse projection (75) and at the other rib end having a deformable region edges (76), and in that the pressure member (14) is a forged or fine cast component.

15. Boring tool according to one of claims 1 to 14, characterized in that the drill shaft (12) includes a radially projecting marking cutter (80) at its driving-side end.

## Revendications

1. Foret pour la réalisation de chambrages dans des prepercages cylindriques non traversants, comportant un corps de foret dont le diamètre correspond à peu près au diamètre du préperçage, à la pointe duquel est rapportée au moins une lame de coupe latérale dépassant radialement au-delà de sa périphérie et qui, par l'intermédiaire d'une surface oblique qui lorsqu'il est contraint axialement, opère une avance radiale de la lame de coupe latérale, peut s'appuyer contre le fond du préperçage, en particulier par l'intermédiaire d'une piece de pression, caractérisé en ce que la pointe (11) du corps (12) du foret présente une surface oblique (13) qui opère l'avance radiale de la lame de coupe latérale, 15) et peut ainsi s'appuyer directement contre le fond (19) du préperçage (17) ou contre la pièce de pression (14), et en ce qu'à sa périphérie extérieure (16), située du côté opposé à la lame de coupe latérale (15) rigidement rapportée, le corps (12) du foret, à peu près de même diamètre que le préperçage, présente un aplatissement qui permet l'introduction du corps (12) du foret dans le préperçage (17) et qui s'étend de façon continue, depuis la pointe (11) du corps (12) du foret sur toute sa longueur, en faisant le même angle par rapport à l'axe (25) du corps du foret.

2. Foret selon la revendication 1, caractérisé en ce que le corps (12) du foret est aplati sauf sur un court tronçon nécessaire pour un raccord d'entraînement (18).

3. Foret selon la revendication 1 ou 2, caractérisé en ce que le corps (12) du foret s'aplatit en conservant son rayon le plus grand (r), le centre (m) de ce rayon se décalant en direction de la lame de coupe latérale (15).

4. Foret selon l'une des revendications 1 à 3, caractérisé en ce que la pièce de pression (14) est une bille (14') ou présente une partie (21, 22, 23, 56), voisine du corps (12) du foret, en forme de demisphère, de forme bombée, en forme de cône saillant ou rentrant ou en forme de tronc de cône, ou bien présente une surface oblique plane (24) sur toute la section du cylindre et/ou présente une partie (20) qui est orientée vers le fond (19) du préperçage (17) et qui a une forme de révolution correspondante, sphérique ou bombée, étant précisé que les deux parties (20 à 23, 56) de la pièce de pression sont d'une seule pièce avec une partie cylindrique (14″) ou une partie tronconique (14‴) disposée au besoin entre elles.

5. Foret selon l'une des revendications 1 à 4, caractérisé en ce que la surface oblique (13) de la pointe (11) du corps du foret s'étend, depuis la périphérie aplatie (16) du corps du foret (12), en direction de l'axe (25) de celui-ci et s'incline en direction de la pièce de pression (14) ou de la pointe (11) du corps du foret et, dans le cas où les extrémités (21, 22) de la pièce de pression sont en saillie, au-delà de l'axe central (25).

6. Foret selon l'une des revendications 1 à 5, caractérisé en ce que le corps (12) du foret présente un perçage pour l'air (33), s'étendant longitudinalement sur son axe, depuis sa pointe (11) jusqu'à son raccord d'entraînement (18).

7. Foret selon l'une des revendications 1 à 6, caractérisé en ce que sur le corps (12) du foret sont prévues au moins deux lames latérales de coupe (15 à 15″) disposées l'une au-dessus de l'autre.

8. Foret selon la revendication 7, caractérisé en ce que les lames latérales de coupe (15 à 15″) sont constituées de pastilles individuelles de carbure et sont disposées alignées ou réparties sur la périphérie à l'intérieur d'un angle d'une valeur allant jusqu'à environ 30°.

9. Foret selon la revendication 1 ou 8, caractérisé en ce que la plus grande distance entre les lames latérales de coupe (15 à 15″) et la périphérie aplatie (16) du corps (12) du foret est au maximum égale au diamètre du corps (12) du foret, étant précisé que les pointes de toutes les lames latérales de coupe (15 à 15″) sont disposées sur une droite (68) qui est parallèle de la périphérie aplatie (16) du corps (12) du foret, ou bien que toutes les lames latérales de coupe débordent radialement de la même valeur au-delà de la périphérie extérieure du corps (12) du foret.

10. Foret selon les revendications 7 à 9, caractérisé en ce que la pièce de pression (14) à introduire dans le préperçage (17) et séparée du corps (12) du foret, présente un noyau de butée fixe (63) dont le plus grand diamètre est inférieur au diamètre du préperçage et qui est revêtu, au moins partiellement, d'une enveloppe déformable, de sorte qu'il se forme une zone de coincement (65).

11. Foret selon l'une des revendications 1 à 10, caractérisé en ce que la pièce de pression (14) est directement fixée à la surface oblique (13) de la pointe (11) du corps du foret, avec liberté de déplacement radial.

12. Foret selon la revendication 10, caractérisé en ce que la fixation de la pièce de pression (14) se fait au moyen d'une rainure de guidage (71) parallèle à la surface oblique en contre-dépouille et dans laquelle une saillie d'accouplement (72) vient axialement en prise de par la forme, et/ou en ce que la rainure de guidage (71) est usinée dans la pointe (11) du corps du foret, et en ce que la saillie d'accouplement (72) a la forme d'une nervure à contre-dépouille ou d'une tête de champignon.

13. Foret selon l'une des revendications 11 ou 12, caractériseé en ce que la saillie d'accouplement (72) de la pièce de pression (14) est disposée sur une surface de glissement (73) de la pièce de pression (14), qui est dirigée dans la direction du mouvement radial de la lame latérale de coupe (15), qui est bombée transversalement à celle-ci et sur laquelle peut s'appuyer la surface oblique (13), bombée de façon correspondante, de la pointe (11) du corps du foret.

14. Foret selon l'une des revendications 10 à 13, caractérisé en ce qu'une pièce de pression présente comme saillie d'accouplement (72) une nervure à contre-dépouille qui possède, à une extrémité de la nervure, une saillie transversale (75) venue de forme et, à l'autre extrémité de la nervure, une zone déformable (arêtes 76), et en ce que la pièce de pression (14) est une pièce de forge ou de fonderie de précision.

15. Foret selon l'une des revendications 1 à 14, caractérisé en ce que le corps (12) du foret présente, à son extrémité côté entraînement, un couteau de marquage (80) saillant radialement.

Fig.2

Fig.1

Fig.3a
(A-A)

Fig.3b
(B-B)

Fig.3c
(C-C)

Fig.3d
(D-D)

EP 0 242 638 B1

Fig.4a          Fig.4b

Fig.4c

Fig.7

Fig.6

Fig.5

# Fig.8

17
25
12
36
16
26
15
11'
13
21
14"
14
20

# Fig.9

17
25
12
36
16
26
15
11"
13
22
24
14"
14
20

# Fig.10

17
25
12
36
16
26
15
11'''
13
23'
23
14"
14
20

EP 0 242 638 B1

Fig.11

Fig.12

Fig.13

56
14''''
14
20

Fig.14

56
14''''
14
20

Fig.15

56
14''''
14
20

Fig.16

56
14'''
14
20

Fig.17

EP 0 242 638 B1

Fig.18

Fig.19

Fig.20

Fig.21  Fig.22  Fig.23

Fig.24  Fig.25

Fig.26  Fig.28

Fig.27

Fig.30　　Fig.29　　Fig.31a

Fig.31b

Fig.31c

Fig.31d

Fig.30a